(19) Europäisches Patentamt
European Patent Office
Office européen des brevets

(11) **EP 2 656 132 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(21) Anmeldenummer: **12756089.4**

(22) Anmeldetag: **16.08.2012**

(51) Int Cl.:
***G02B 21/06*** *(2006.01)* ***G02B 21/08*** *(2006.01)*

(86) Internationale Anmeldenummer:
**PCT/EP2012/003495**

(87) Internationale Veröffentlichungsnummer:
**WO 2013/020715 (14.02.2013 Gazette 2013/07)**

(54) **VORRICHTUNG UND VERFAHREN ZUR DURCHLICHTBELEUCHTUNG FÜR LICHTMIKROSKOPE UND MIKROSKOPSYSTEM**

TRANSILLUMINATION DEVICE AND METHOD FOR LIGHT MICROSCOPES, AND A MICROSCOPE SYSTEM

DISPOSITIF ET PROCÉDÉ D'ÉCLAIRAGE PAR TRANSMISSION POUR DES MICROSCOPES OPTIQUES ET SYSTÈME MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011 DE 102011114252**

(43) Veröffentlichungstag der Anmeldung:
**30.10.2013 Patentblatt 2013/44**

(73) Patentinhaber: **Carl Zeiss Microscopy GmbH 07745 Jena (DE)**

(72) Erfinder:
• **HEIN, Detlef 37083 Göttingen (DE)**
• **FECHTI, Jürgen 37079 Göttingen (DE)**
• **MILINOVICI, Gleb 37075 Göttingen (DE)**

(74) Vertreter: **Schiffer, Axel Martin et al Weber & Heim Patentanwälte Partnerschaftsgesellschaft mbB Irmgardstrasse 3 81479 München (DE)**

(56) Entgegenhaltungen:
**JP-A- 2002 189 174 JP-A- 2007 219 406 US-A1- 2001 005 280 US-A1- 2005 259 320**

**Beschreibung**

Die vorliegende Erfindung bezieht sich in einem ersten Gesichtspunkt auf eine Vorrichtung zur Durchlichtbeleuchtung für Lichtmikroskope, insbesondere Stereomikroskope oder Makroskope, mit veränderlicher wirksamer Eintrittspupille eines Objektivs nach dem Oberbegriff des Anspruchs 1.

In einem weiteren Aspekt betrifft die Erfindung ein Verfahren zur Durchlichtbeleuchtung für ein Lichtmikroskop mit veränderlicher Eintrittspupille eines Objektivs nach dem Oberbegriff des Anspruchs 11. Außerdem bezieht sich die Erfindung auf ein Mikroskopsystem.

Eine gattungsgemäße Vorrichtung zur Durchlichtbeleuchtung für Lichtmikroskope ist beispielsweise in DE 10 2004 056 685 A1 beschrieben und weist ein Gehäuse auf, in dem eine Lichtquelle zum Aussenden eines Beleuchtungslichtbündels angeordnet ist. Die Vorrichtung weist außerdem eine Halteeinrichtung zum Halten einer zu untersuchenden Probe auf und mindestens eine Blendenkante zum Beschneiden des Beleuchtungslichtbündels, die zwischen der Halteeinrichtung und der Lichtquelle angeordnet ist und die sich quer zu einer optischen Achse, insbesondere eines Objektivs, eines Lichtmikroskops erstreckt, welches in einem Betriebszustand an der Vorrichtung zur Durchlichtbeleuchtung positionierbar ist. Ein Strahlengang des Beleuchtungslichts zwischen der Blendenkante und einer von der Halteeinrichtung gehaltenen Probe ist dabei frei von verstellbaren strahlfokussierenden Komponenten.

Bei einem gattungsgemäßen Verfahren zur Durchlichtbeleuchtung für ein Lichtmikroskop mit veränderlicher wirksamer Eintrittspupille eines Objektivs wird eine von einer Halteeinrichtung gehaltene Probe mit Beleuchtungslicht von einer Lichtquelle beaufschlagt. Dabei wird ein von der Lichtquelle ausgehendes Beleuchtungslichtbündel von einer zwischen der Halteeinrichtung und der Lichtquelle angeordneten Blendenkante beschnitten.

In DE 10 2004 056 685 A1 ist eine Beleuchtungseinrichtung mit zwei schwenkbaren Blenden beschrieben. Der Drehpunkt der Blenden ist dabei fixiert und lässt sich nicht verschieben. Außerdem gibt es keine Mittel zur Erfassung, Speicherung und/oder Reproduzierung von den Beleuchtungseinstellungen der schwenkbaren Blenden oder automatisch an das Objekt angepasste Voreinstellungen. Diese Beleuchtungseinrichtung ist deshalb wenig komfortabel in der Bedienung. Der nutzbare Bereich für zusätzliche Komponenten ist hier stark beschränkt und nicht erweiterbar. Dadurch ist die Beleuchtungseinrichtung für manche Anwendungen nicht oder nur schlecht einsetzbar.

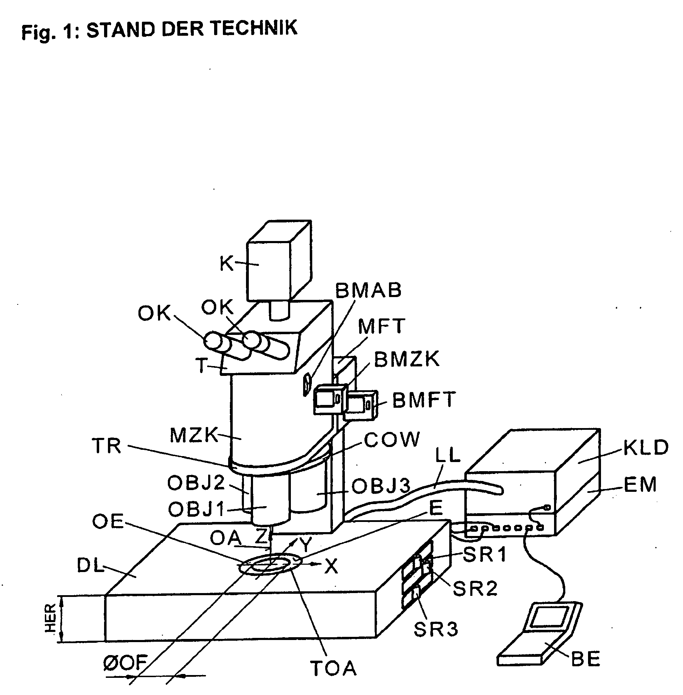

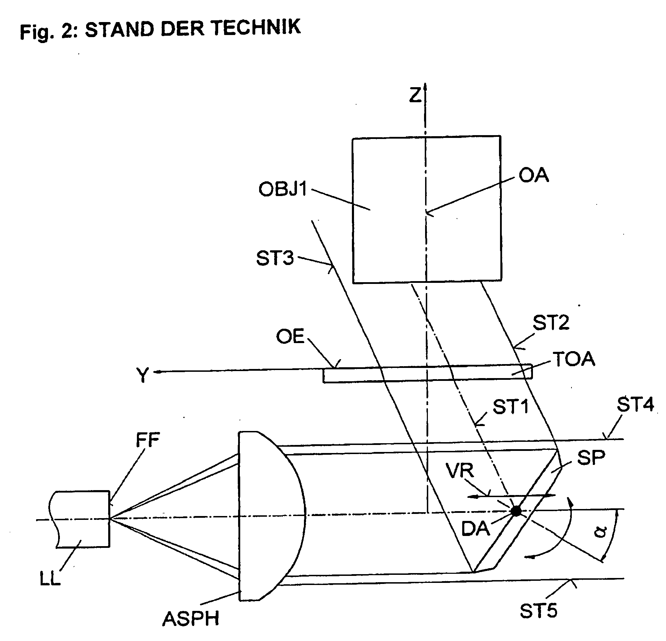

Der Stand der Technik wird anhand der Figuren 1 und 2 näher erläutert.

Figur 1 zeigt eine typische Stereomikroskop-Anordnung nach dem Stand der Technik. Eine Durchlichteinrichtung DL leuchtet das Objektfeld mit einem Durchmesser OF aus, das sich in der Ebene OE befindet, die durch die am höchsten liegende Fläche der Durchlichteinrichtung DL gekennzeichnet ist. Auf der Durchlichteinrichtung DL befindet sich eine motorisierte Fokussiereinrichtung MFT, die sich über eine Bedieneinheit BMFT bedienen lässt und an der ein Träger TR mit einem codierten Objektivwechsler COW angebracht ist. Über den Objektivwechsler COW lassen sich drei Objektive OBJ1, OBJ2, OBJ3 mit unterschiedlichen Eigenschaften benutzen. Beispielsweise hat das Objektiv OBJ2 neben einer anderen Objektivergrößerung bei dem kleinsten Zoomfaktor β auch eine deutlich weiter von der Objektebene OE entfernt liegende Eintrittspupille, als die beiden anderen Objektive. Mit dem Bezugszeichen BMAB ist in Figur 1 ein Bedienelement für eine motorisierte Aperturblende MAP gekennzeichnet. Eine Ebene in Höhe der Objektauflage auf der Durchlichteinrichtung ist mit E bezeichnet. MFT kennzeichnet eine motorisierte Fokussiereinrichtung.

Auf dem Träger TR ist ein motorisierter Zoomkörper MZK angeordnet, der sich über eine Bedieneinheit BMZK bedienen lässt. Auf dem motorisierten Zoomkörper MZK befindet sich ein Tubus T, mit dem sich das Stereomikroskopbild direkt über die beiden Okulare OK beobachten lässt. Außerdem ermöglicht der Tubus T über eine angeschlossene Kamera K auch die Dokumentation der betrachteten Bilder.

Die im Stand der Technik nicht motorisierte Durchlichteinrichtung DL wird durch eine Kaltlichtquelle KLD über einen faseroptischen Lichtleiter LL mit Licht versorgt; sie hat drei manuell einstellbare Bedienelemente SR1, SR2, SR3 zur Variation der Beleuchtungseinstellungen.

Die Steuerung des Gesamtsystems erfolgt durch das Elektronikmodul EM und die daran angeschlossene Bedieneinheit BE. Die Kommunikation innerhalb des Gesamtsystems wird beispielsweise über einen CAN-Bus realisiert.

Zur weiteren Betrachtung wird ein Koordinatensystem mit den Koordinatenachsen X, Y und Z eingeführt. Der Koordinatenursprung liegt im Zentrum der Objektebene OE. Aus Vereinfachungsgründen wird in dieser Darstellung die Oberseite der transparenten Objektauflage TOA anfokussiert, das heißt OE ist identisch mit der Oberseite der transparenten Objektauflage TOA und liegt in der Ebene, die aus den Koordinatenachsen X und Y aufgespannt wird. Die positiven Halbachsen zeigen vom Benutzer aus gesehen in folgende Richtungen: X nach rechts, Y nach hinten, Z nach oben. Die Z-Achse ist identisch mit der optischen Achse OA des gerade eingeschalteten Objektivs.

Für Stereomikroskope und Makroskope gibt es zahlreiche Durchlicht-Beleuchtungsverfahren, die hauptsächlich aufgrund der Zoomfunktion des Zoomkörpers MZK nicht für alle möglichen Abbildungsbedingungen eine geeignete Ausleuchtung liefern können. Dies gilt besonders für den Übersichtsbereich, das heißt für die kleineren Zoomfaktoren des Zoomkörpers. Häufig wird die Beleuchtung von Stereomikroskopen und Makroskopen mit geeigneten Mitteln, zum Beispiel mit Milchüberfanggläsern, homogenisiert. Dadurch verbessert sich zwar die Homogenität der Ausleuchtung, allerdings nehmen der Kontrast und die Helligkeit aufgrund der Lichtverteilung in größere Raumwinkelbereiche entsprechend ab, das störende Streulicht nimmt zu. Somit liefern die entsprechend ausgeleuchteten Übersichtsabbildungen nur sehr schlechte Kontraste, viele Details lassen sich erst mit größeren Zoomfaktoren $\beta$ erkennen. Das hierdurch erforderliche Hoch- und Herunterzoomen erfordert viel Zeit und die Übersicht geht während des Zoomvorgangs bei größeren Zoomfaktoren $\beta$ verloren.

Figur 2 zeigt das Funktionsprinzip einer bekannten Durchlichteinrichtung DL aus Figur 1. Die Frontfläche FF des Lichtleiters LL wird über eine Asphäre ASPH näherungsweise nach Unendlich abgebildet, das heißt die von einem gemeinsamen Punkt der Frontfläche FF des Lichtleiters LL ausgehenden Lichtstrahlen verlaufen nach der Asphäre ASPH parallel. Als Beispiel sind in Figur 2 die Lichtstrahlen ST1, ST2, ST3, ST4 und ST5 ausgehend von einem gemeinsamen Punkt auf dem Lichtleiter LL dargestellt. Hinter der Asphäre ASPH befindet sich ein Umlenkspiegel SP, der sich über die drei in Figur 1 dargestellten Bedienelemente SR1, SR2, SR3 in verschiedene Richtungen bewegen oder drehen lässt.

Über das Bedienelement SR1 wird der Spiegel SP um die Drehachse DA bis zum gewünschten Einstellwinkel $\alpha$ gedreht, wodurch die auf den Umlenkspiegel SP treffenden Lichtstrahlen in die entsprechenden Richtungen umgelenkt werden können. Mit dem Bedienelement SR2 lässt sich der Umlenkspiegel SP zusammen mit der Drehachse DA in der Verschieberichtung VR bewegen. Dadurch treten die vom Umlenkspiegel SP reflektierten Lichtstrahlen abhängig von der Spiegelposition an verschiedenen Punkten durch die transparente Objektauflage TOA und die Objektebene OE hindurch.

Über das Bedienelement SR3 wird der Umlenkspiegel SP in der X-Richtung, also senkrecht zur Darstellungsebene, bewegt. Dadurch wird ohne Änderung der Spiegelgeometrie eine andere Spiegeloberfläche mit abweichenden Reflexionseigenschaften wirksam. Beide benutzbaren Spiegeloberflächen reflektieren nicht zu 100% gerichtet, das heißt sie reflektieren diffus streuend, wobei der Streuanteil beider Spiegeloberflächen unterschiedlich groß ist. Um eine möglichst homogene Beleuchtung zu erzielen, ist die stärker streuende Spiegeloberfläche zu benutzen, wodurch sich der Kontrast verschlechtert und die Bildhelligkeit abnimmt.

Auf Kosten der Homogenität lässt sich der Kontrast steigern, wenn die schwächer streuende Spiegeloberfläche benutzt wird, was einer eher gerichteten Beleuchtung entspricht.

Das Einstellen der beschriebenen Beleuchtungsparameter erfordert vom Benutzer eine gewisse Erfahrung, das heißt ungeübte Benutzer sind mit der Beleuchtungseinstellung über die drei Bedienelemente SR1, SR2, SR3 ohne weitere Hilfestellung gegebenenfalls überfordert.

Durchlichteinrichtungen DL, die einen neigbaren Umlenkspiegel SP gemäß Figur 2 enthalten, erfordern zur Ausleuchtung von größeren Objektfeldern aus konstruktiven Gründen außerdem eine relativ große Bauhöhe. Trotzdem ist die erreichbare Homogenität und Kontrastierung auch bei einer großen Bauhöhe mit dieser Anordnung noch nicht optimal.

Bei normalen Lichtmikroskopen und einigen Makroskopen sind Durchlicht-Beleuchtungsverfahren bekannt, die eine feste Pupillenebene voraussetzen. Dann werden meistens kontraststeigernde Elemente in den Beleuchtungsstrahlengang und/oder den Abbildungsstrahlengang gebracht, insbesondere in die Objektivpupille oder eine hierzu konjugierte Ebene. Dies ist extrem aufwändig und lässt sich an Zoomsystemen, also auch an Stereomikroskopen und Makroskopen, wenn überhaupt, nur mit starken Einschränkungen realisieren. Diese klassischen Verfahren funktionieren nur mit speziellen Objektiven mit teurem Zubehör, zum Beispiel DIC-Schieber, und nur in bestimmten Zoombereichen. Das Optik-Design erfordert ungünstig große Bauräume sowie gegebenenfalls spannungsfreie Optiken für Polarisationsverfahren. Außerdem muss in der Beleuchtungseinrichtung eine Möglichkeit zur Manipulation der kontraststeigernden Elemente sowie in der Regel auch eine Möglichkeit zur Anpassung an verschieden große Objektfelder durch wechselbare Kondensorlinsen vorhanden sein. Diese Lösungen sind somit nur für spezielle Anwendungen geeignet und zudem sehr teuer.

In US 2001/005280 A1 ist eine Lichtquelle für ein Stereomikroskop beschrieben, bei der in einen weitgehend kollimierten Strahlengang eine Blendenkante eingeschoben wird.

Sämtliche Lösungen im Stand der Technik sind aufwändig in der Realisierung und/oder lassen im Hinblick auf Benutzerfreundlichkeit und nutzbaren Bauraum zu wünschen übrig.

Als eine Aufgabe der Erfindung kann angesehen werden, eine Vorrichtung und ein Verfahren zur Durchlichtbeleuchtung für Lichtmikroskope und ein hierauf basierendes Mikroskopsystem zu schaffen, welches prinzipiell mit einfachen technischen Mitteln zu verwirklichen ist. Außerdem soll im Vergleich zum Stand der Technik die Bedienbarkeit verbessert werden.

Diese Aufgabe wird in einem ersten Gesichtspunkt durch die Vorrichtung mit den Merkmalen des Anspruchs 1 gelöst.

In verfahrensmäßiger Hinsicht wird die Vorrichtung durch das Verfahren mit den Merkmalen des Anspruchs 11 gelöst. Außerdem wird durch die Erfindung ein Mikroskopsystem mit den Merkmalen des Anspruchs 17 bereitgestellt.

Vorteilhafte Ausführungsbeispiele der erfindungsgemäßen Vorrichtung und bevorzugte Varianten des erfindungsgemäßen Verfahrens werden im Folgenden mit Bezug auf die abhängigen Ansprüche und insbesondere im Zusammenhang mit den beigefügten Figuren erläutert.

Eine Vorrichtung der oben genannten Art ist erfindungsgemäß dadurch weitergebildet, dass zum Anpassen des Strahlengangs des Beleuchtungslichts an die wirksame Eintrittspupille des Objektivs Mittel zum variablen Positionieren der Blendenkante in Richtung der optischen Achse vorhanden sind, wobei eine Position der Blendenkante in Richtung der optischen Achse unabhängig von einer Position der Blendenkante quer zur optischen Achse variierbar ist, dass an dem Gehäuse Montagemittel zum Montieren eines separaten Probenauflagetischs vorhanden sind, dass Mittel zum Feststellen der Anwesenheit eines Probenauflagetischs vorhanden sind, dass das Gehäuse eine Durchgriffsöffnung aufweist, durch welche die Blendenkante in Richtung der optischen Achse hindurchbewegbar ist, dass die Halteeinrichtung im Bereich der Durchgriffsöffnung des Gehäuses oder an einem separaten Probenauflagetisch gebildet ist und dass eine Steuerungseinrichtung vorhanden ist, die zum Positionieren der Blendenkante abhängig mindestens von einer festgestellten Anwesenheit eines Probenauflagetischs eingerichtet ist.

Bei dem Verfahren der oben genannten Art ist insbesondere ein Strahlengang des Beleuchtungslichts zwischen der Blendenkante und der von der Halteeinrichtung gehaltenen Probe frei von verstellbaren strahlfokussierenden Komponenten, wobei die Lichtquelle in einem Gehäuse angeordnet ist, an welchem mit Montagemitteln ein separater Probenauflagetisch montierbar ist, wobei die Halteeinrichtung im Bereich der Durchgriffsöffnung des Gehäuses oder an einem separaten Probenauflagetisch gebildet ist und wobei das Gehäuse eine Durchgriffsöffnung aufweist, durch welche die Blendenkante in Richtung einer optischen Achse hindurchbewegbar ist. Das Verfahren ist erfindungsgemäß dadurch weitergebildet, dass die Anwesenheit eines Probenauflagetischs festgestellt wird, dass die Blendenkante sich quer zu einer optischen Achse, insbesondere des Objektivs, erstreckt und abhängig von der Lage der wirksamen Eintrittspupille des Objektivs und abhängig mindestens von einer festgestellten Anwesenheit eines Probenauflagetischs in Richtung der optischen Achse positioniert wird.

Schutz wird außerdem beansprucht für ein Mikroskopsystem, welches ein Lichtmikroskop und eine erfindungsgemäße Vorrichtung zur Durchlichtbeleuchtung aufweist.

Als ein erster Kerngedanke der Erfindung kann erachtet werden, das von der Lichtquelle ausgesandte Beleuchtungslicht mit einer Blendenkante zu beschneiden, wobei die Blendenkante in Richtung der optischen Achse je nach Lage der wirksamen Eintrittspupille des optischen Systems einstellbar ist.

Als eine weitere wesentliche Idee der Erfindung kann angesehen werden, dass automatisch erkannt wird, ob auf das Gehäuse der Durchlichtbeleuchtung ein Probenauflagetisch aufgesetzt ist. Ohne Probenauflagetisch kann eine zu untersuchende Probe an einer Halteeinrichtung, die an der Durchgriffsöffnung des Gehäuses gebildet ist, gehalten werden. Diese Halteeinrichtung am Gehäuse kann beispielsweise durch eine Vertiefung für einen Objektträger oder eine transparente Objektauflage ausgeführt sein. Mit Probenauflagetisch wird zum Halten der Probe die Halteeinrichtung des Probenauflagetischs genutzt. Dadurch wird die Probe an einer Position gehalten, die gegenüber dem Fall ohne Probenauflagetisch in Richtung der optischen Achse versetzt ist. Die Richtungsangabe "in Richtung der optischen Achse" wird im Rahmen der vorliegenden Beschreibung synonym verwendet wie "entlang der optischen Achse".

Vorteilhafterweise können mit dem erfindungsgemäßen Verfahren und der erfindungsgemäßen Vorrichtung die Durchlichtbeleuchtung bei einem Lichtmikroskop mit veränderlicher Eintrittspupille automatisch an verschiedene Objektlagen, die sich bei Verwendung von unterschiedlichem Zubehör ergeben, anpasst werden.

Zum Anbringen des Probenauflagetischs sind erfindungsgemäß Montagemittel am Gehäuse der Vorrichtung zur Durchlichtbeleuchtung vorhanden. Diese können in grundsätzlich beliebiger Weise gebildet sein, solange der Probenauflagetisch mit den Montagemitteln in einer definierten Position gehalten wird. Beispielsweise können das Gehäuse und eine Unterseite des Probenauflagetischs passend für einen mechanischen Eingriff miteinander geformt sein. Für einen besonders stabilen Halt sind auch Schraub-, Klemm-, Schnapp- oder Magnetverbindungen möglich.

Mit dem Probenauflagetisch kann eine kostengünstige Erweiterung des Nutzungsbereichs der Vorrichtung zur Durchlichtbeleuchtung bereitgestellt werden. Innerhalb des Probenauflagetischs ist Raum für Zubehör, beispielsweise für weitere Lichtquellen wie eine Ringleuchte zur Dunkelfeld-Mikroskopie.

Bei einer bevorzugten Ausgestaltung der erfindungsgemäßen Vorrichtung sind Mittel zum Feststellen einer Identität eines Probenauflagetischs vorhanden und die Steuerungseinrichtung ist zum Positionieren der Blendenkante abhängig von einer festgestellten Identität eines Probenauflagetischs eingerichtet. Gemäß einer Ausführung der erfindungsgemäßen Vorrichtung sind Probenauflagetische verschiedener Bauhöhe vorhanden, von denen einer zum Montieren am Gehäuse ausgewählt werden kann. Indem die Steuerungseinrichtung zum Feststellen einer Identität eines separaten Probenauflagetischs eingerichtet ist, kann auch zwischen Probenauflagetischen verschiedener Bauhöhe unterschieden werden.

Weil sich durch einen separaten Probenauflagetisch die Objektebene, an welcher sich eine zu untersuchende Probe befindet, ändert, sollte eine Ausleuchtung des verwendeten Objektivs möglichst entsprechend angepasst werden. Deshalb ist die Steuerungseinrichtung erfindungsgemäß dazu eingerichtet, abhängig von einer festgestellten Anwesenheit eines separaten Probenauflagetischs die Blende zu positionieren.

Für eine ideale Ausleuchtung des verwendeten Objektivs kann eine Positionierung der Blende innerhalb des Probenauflagetischs zweckmäßig sein. Bei einer bevorzugten Ausgestaltung der erfindungsgemäßen Vorrichtung ist die Steuerungseinrichtung deshalb dazu eingerichtet, die Blendenkante aus dem Gehäuse durch die Durchgriffsöffnung in den Innenraum des Probenauflagetischs zu bewegen. Hierbei kann ein Zusammenstoß zwischen der Blendenkante und der Halteeinrichtung des Probenauflagetischs vermieden werden, weil durch die Erkennung der Identität des Probenauflagetischs auch die Position der Halteeinrichtung bekannt ist.

Bei einer bevorzugten Ausführungsvariante der erfindungsgemäßen Vorrichtung ist die Steuerungseinrichtung dazu eingerichtet, die Blendenkante genau dann durch die Durchgriffsöffnung des Gehäuses hindurchzubewegen, wenn die Mittel zum Feststellen der Anwesenheit eines Probenauflagetischs die Anwesenheit eines Probenauflagetischs feststellen. Für den Fall, dass Zubehör in den Probenauflagetisch eingesetzt ist, welches einen Bewegungsraum der Blendenkante belegt, kann vorgesehen sein, dass die Steuerungseinrichtung zur Vermeidung von Zusammenstößen auch weiteres Zubehör bei der Positionierung der Blendenkante berücksichtigt.

Das erfindungsgemäße Verfahren kann insbesondere mit der erfindungsgemäßen Vorrichtung zur Durchlichtbeleuchtung verwirklicht werden. Hierzu ist bei dem erfindungsgemäßen Mikroskopsystem in einer vorteilhaften Variante eine Steuereinrichtung vorhanden, die mit Bestandteilen des Lichtmikroskops und der Vorrichtung zur Durchlichtbeleuchtung verbunden ist und zum Ansteuern des Mikroskops und der Vorrichtung zur Durchlichtbeleuchtung zur Durchführung eines erfindungsgemäßen Verfahrens eingerichtet ist.

Bei einer besonders einfach aufgebauten Variante sind zwischen der Blendenkante und der Probe gar keine strahlfokussierenden Komponenten, insbesondere gar keine strahlformenden Komponenten vorhanden.

Mit dem Begriff der optischen Achse ist für die vorliegende Beschreibung im Wesentlichen und in der Regel die optische Achse eines Objektivs eines Lichtmikroskops gemeint, welches in einem Betriebszustand an der erfindungsgemäßen Vorrichtung zur Durchlichtbeleuchtung angeordnet oder positioniert ist.

Wenn es sich bei dem angeschlossenen Lichtmikroskop um ein Stereomikroskop mit zueinander geneigten Mittenlichtstrahlen LM und RM handelt, kann mit dem Begriff der optischen Achse sowohl

    i) die optische Achse des Objektives, in dem Falle, dass das Objektiv nur einen Beobachtungskanal symmetrisch erfasst,

    ii) die Winkelhalbierende zwischen den beiden Mittenlichtstrahlen, wenn durch das Objektiv beide Beobachtungskanäle erfasst werden, oder aber

    iii) der Mittenlichtstrahl nur eines Kanals, wenn nur ein Beobachtungskanal nicht symmetrisch erfasst wird,

bezeichnet werden.

Sodann kann der Begriff der optischen Achse auch im Hinblick auf die erfindungsgemäße Vorrichtung zur Durchlichtbeleuchtung selbst in dem Sinn definiert werden, dass damit im Wesentlichen die Richtung gemeint ist, in welcher das Beleuchtungslicht abgestrahlt wird. In einem gewöhnlichen Fall ist die erfindungsgemäße Vorrichtung zur Durchlichtbeleuchtung als im Wesentlichen flacher Kasten gebildet, der beispielsweise auf einem Labortisch liegt. In diesem Fall weist die optische Achse in Richtung der vertikalen Richtung, also in Richtung der Z-Richtung.

Der Begriff der Halteeinrichtung ist für die Zwecke der vorliegenden Beschreibung funktional auszulegen, das heißt dass damit jedes Mittel gemeint ist, mit welchem eine zu untersuchende Probe in irgendeiner Weise relativ zu dem Beleuchtungslichtbündel und der Optik eines anzuschließenden Lichtmikroskops positioniert werden kann.

Sodann ist der Begriff der wirksamen Eintrittspupille phänomenologisch auszulegen. Es handelt sich dabei demgemäß nicht um eine errechnete oder theoretische Eintrittspupille des optischen Systems, sondern faktisch um denjenigen Bereich, in welchem eine Taille des Beleuchtungslichtstrahles, womit nur Strahlungsanteile gemeint sind, welche tatsächlich zur Abbildung beitragen, einen minimalen Querschnitt aufweist. Dieser, vorliegend als wirksame Eintrittspupille bezeichnete Flächenbereich, wird durch Messen, also durch Ausprobieren ermittelt. In der Praxis hängt die Lage dieser wirksamen Eintrittspupille neben den verwendeten Optiken auch von der untersuchten Probe und von Probenhalterungen, wie Objektträgern oder sonstigen transparenten Probenauflagen, ab und ist bei gewöhnlichen Zoommikroskopen keine wohldefinierte ebene Fläche.

Bei einer besonders bevorzugten Variante des erfindungsgemäßen Verfahrens wird die Blendenkante in einer Ebene einer wirksamen Eintrittspupille des Objektivs positioniert. Insbesondere kann dabei die Blendenkante in Richtung quer zur optischen Achse so positioniert werden, dass sie die Eintrittspupille in Richtung quer zur optischen Achse gerade berührt. Hierdurch wird als vorteilhafte technische Wirkung erreicht, dass ein wesentlicher Teil des Beleuchtungslichts, der ohne die Blende Beiträge zum Streulicht hätte liefern können, nunmehr ausgeblendet ist.

Sodann eröffnet die Positionierung der Blendenkante in der Ebene der wirksamen Eintrittspupille die Möglichkeit, eine Schräglichtbeleuchtung dadurch zu erreichen, dass die Blendenkante einen Teil der wirksamen Eintrittspupille abdeckt. Besonders bevorzugt beschneidet die Blendenkante bei diesen Ausführungsvarianten das Beleuchtungslichtbündel asymmetrisch. Das bedeutet, dass bestimmte Strahlen des Beleuchtungslichts herausselektiert werden und im Ergebnis eine Schräglichtbeleuchtung erzielt wird. Hierdurch können in der Praxis vorteilhafte Verbesserungen der Kontrastierung erzielt werden. Hierzu ist bei einer besonders vorteilhaften Ausführungsform der erfindungsgemäßen Vorrichtung die Blendenkante eine lineare Blendenkante. Prinzipiell können aber auch gebogene Blendenkanten verwendet werden.

Gemäß einer weiteren vorteilhaften Variante des erfindungsgemäßen Verfahrens kann demgemäß die Blendenkante zum Einstellen von Helligkeit und Kontrast in einer Richtung quer zur optischen Achse positioniert werden. Hierzu sind bei der erfindungsgemäßen Vorrichtung zur Durchlichtbeleuchtung besonders bevorzugt geeignete Mittel zum variablen Positionieren der Blendenkante in einer Richtung quer zur optischen Achse vorhanden.

Beleuchtungslicht, das von Orten außerhalb der Eintrittspupille in das optische System, also das Mikroskopobjektiv, eintritt, kann dort in der Durchlichthellfeldabbildung nicht zur Abbildung selbst, sondern nur zum Streuuntergrund beitragen. Das ist nicht erwünscht und hieraus ergibt sich eine weitere vorteilhafte Verfahrensvariante, bei der eine Leuchtquelle der Lichtquelle einer tatsächlich wirksamen Rückprojektion des Beleuchtungslichts angepasst wird. Das bedeutet, dass Teile der Leuchtfläche, die kein zur Abbildung beitragendes Beleuchtungslicht liefern können, von vornherein ausgeblendet werden. Hierzu ist bei der erfindungsgemäßen Vorrichtung vorteilhafterweise zum Variieren einer wirksamen Leuchtfläche der Lichtquelle mindestens eine weitere Blende vorhanden, die unmittelbar vor der Lichtquelle positioniert ist.

Bevorzugt kann ein IDFII-Film (Image Directing Film) mit einer asymmetrischen Prismenstruktur verwendet werden, der in Kombination mit einer homogen abstrahlenden Leuchtfläche genutzt wird. Diese kann vorzugsweise über eine Flächenleuchte mit einer gerichteten Abstrahlcharakteristik realisiert werden, beispielsweise eine PHLOX-Flächenleuchte. Der IDFII-Film ist bevorzugt neigbar und/oder azimutal drehbar gelagert.

Bei einer weiteren vorteilhaften Ausführungsvariante der erfindungsgemäßen Vorrichtung ist zum Beschneiden des Beleuchtungslichtbündels zwischen der Halteeinrichtung und der Lichtquelle mindestens eine weitere variabel positionierbare Blende vorhanden. Mit einer solchen weiteren Blende, welche insbesondere eine lineare Blendenkante aufweisen kann, können im Hinblick auf das Reduzieren von Streulicht weitere Verbesserungen erzielt werden. Außerdem kann es zweckmäßig sein, für bestimmte Lagen der wirksamen Eintrittspupille eine weitere variabel positionierbare Blende zur Verfügung zu haben.

Bei einer besonders bevorzugten Ausführung der erfindungsgemäßen Vorrichtung ist in den Probenauflagetisch Zubehör, insbesondere eine Ringleuchte zur Dunkelfeld-Mikroskopie, einsetzbar. Zudem sind Mittel zum Feststellen der Anwesenheit von in den Probenauflagetisch eingesetztem Zubehör vorhanden und die Steuerungseinrichtung ist dazu eingerichtet, die Blendenkante abhängig von einer festgestellten Anwesenheit von in den Probenauflagetisch eingesetztem Zubehör zu positionieren. Vorteilhafterweise kann somit die Blendenkante auch außerhalb des Gehäuses positioniert werden, soweit dort kein Zubehör vorhanden ist. Ein Zusammenstoß der Blendenkante mit dem Zubehör kann hiermit vermieden werden.

Bei einer weiteren bevorzugten Variante der erfindungsgemäßen Vorrichtung ist vorgesehen, dass Montagemittel für mindestens eine Adapterplatte zum Beeinflussen des Beleuchtungslichtbündels, insbesondere für einen Polarisationsfilter, einen Farbfilter, einen Diffusor und/oder eine Blende, vorhanden sind, dass Mittel zum Feststellen der Anwesenheit einer Adapterplatte vorhanden sind und dass die Steuerungseinrichtung dazu eingerichtet ist, die Blendenkante abhängig von einer festgestellten Anwesenheit einer Adapterplatte zu positionieren. Die Montagemittel für die Adapterplatte können beispielsweise als Ausnehmung oder Einschubsöffnung an der Durchgriffsöffnung des Gehäuses gebildet sein. Eine eingesetzte Adapterplatte ist hierdurch unterhalb der Halteeinrichtung des Gehäuses angeordnet. In diesem Fall steht auch bei aufgesetztem Probenauflagetisch der Tischinnenraum nicht der Blende zur Verfügung. Die Steuerungseinrichtung begrenzt somit einen erlaubten Bewegungsraum der Blendenkante auf einen Bereich innerhalb des Gehäuses und bis unmittelbar vor der Adapterplatte. Die Steuerungseinrichtung kann auch dazu eingerichtet sein, eine Richtungsbeeinflussung des Beleuchtungslichtbündels durch die Adapterplatte zu berücksichtigen und die Blendenkante zu einer anderen Position als ohne Adapterplatte zu bewegen. Geeignete Positionen der Blendenkante können vorab durch Messungen bestimmt und in einem Speicher der Steuereinrichtung gespeichert worden sein.

Bevorzugt sind auch Mittel zum Feststellen einer Identität von in den Probenauflagetisch eingesetztem Zubehör vorhanden und die Steuerungseinrichtung ist zum Positionieren der Blendenkante abhängig von einer festgestellten Identität von in den Probenauflagetisch eingesetztem Zubehör eingerichtet.

Außerdem ist bevorzugt, dass auch Mittel zum Feststellen einer Identität einer Adapterplatte vorhanden sind und dass die Steuerungseinrichtung zum Positionieren der Blendenkante abhängig von einer festgestellten Identität einer Adapterplatte eingerichtet ist. Vorteilhafterweise kann somit zwischen verschiedenem Zubehör und/oder verschiedenen Adapterplatten unterschieden werden und ein erlaubter Bewegungsraum für die Blendenkante abhängig von den Abmessungen der identifizierten Adapterplatte und/oder dem identifizierten Zubehör festgelegt werden.

Bei einem besonders bevorzugten Ausführungsbeispiel der erfindungsgemäßen Vorrichtung weisen die Mittel zum Feststellen der Anwesenheit und insbesondere Identität eines Probenauflagetischs, die Mittel zum Feststellen der Anwesenheit und insbesondere Identität von in den Probenauflagetisch eingesetztem Zubehör und die Mittel zum Feststellen der Anwesenheit und insbesondere Identität einer Adapterplatte jeweils einen Magnetfeldsensor, insbesondere einen Hallsensor, auf. Grundsätzlich können aber auch andere Sensoren, beispielsweise Drucksensoren, optische Sensoren oder kapazitive Näherungsschalter, verwendet werden. Die Mittel zum Feststellen der Anwesenheit eines Probenauflagetischs und die Mittel zum Feststellen der Identität eines Probenauflagetischs können somit durch dieselbe Einrichtung, etwa einen Magnetfeldsensor, ausgeführt sein. Gleiches gilt bezüglich der Feststellung der Anwesenheit und Identität von Zubehör und der Adapterplatte.

Bei einer erfindungsgemäßen Ausführungsvariante kann zwischen verschiedenen Probenauflagetischen unterschieden werden, indem diese mit verschieden starken Magneten ausgestattet sind. Die Steuerungseinrichtung ist dann dazu eingerichtet, die Probenauflagetische an Hand der Magnetfeldstärke, die vom Hallsensor bestimmt wird, zu unterscheiden. Statt verschieden starken Magneten können die Magnete auch so an den Probeauflagetischen angebracht sein, dass sie in einem aufgesetzten Zustand des Probenauflagetischs unterschiedlich nah an den Hallsensor gelangen. In analoger Weise kann zwischen verschiedenem Zubehör und zwischen verschiedenen Adapterplatten unterschieden werden.

Bei einer weiteren bevorzugten Ausführungsvariante der erfindungsgemäßen Vorrichtung ist mit den Mitteln zum variablen Positionieren der Blendenkante in Richtung der optischen Achse und mit den Mitteln zum variablen Positionieren der Blendenkante in einer Richtung quer zur optischen Achse die Blendenkante um eine Drehachse, welche quer zur optischen Achse steht, drehbar. Im Vergleich zu einem Verschieben in Richtung der optischen Achse ist durch ein Drehen vorteilhafterweise der Raumbedarf der Blende in einer Ebene quer zur optischen Achse geringer. Dadurch kann die Blendenkante auch durch eine verhältnismäßig kleine Durchgriffsöffnung bewegt werden. Die Größe der Durchgriffsöffnung ist in der Regel auf die Größe üblicher transparenter Objektauflagen, beispielsweise Glasscheiben mit einem Außendurchmesser von 120 mm, abgestimmt und kann nicht beliebig groß gewählt werden.

Demgemäß ist bei einer bevorzugten Variante des erfindungsgemäßen Verfahrens vorgesehen, dass zum Bewegen der Blendenkante durch die Durchgriffsöffnung die Blendenkante zumindest um eine Drehachse, welche quer zur optischen Achse steht, gedreht wird. Die Blendenkante wird somit vollständig durch die Durchgriffsöffnung bewegt, während die Blende als Ganzes nur teilweise durch die Durchgriffsöffnung geführt wird.

Bei einem weiteren bevorzugten Ausführungsbeispiel des erfindungsgemäßen Verfahrens wird zum Bestimmen einer Position der Blendenkante diese, insbesondere nach einem Einschalten der Vorrichtung zur Durchlichtbeleuchtung, in eine Referenzposition bewegt. Die Ausgangsposition ist hier unbekannt. Zum Vermeiden eines Zusammenstoßes zwischen der Blendenkante und der Halteeinrichtung wird die Blendenkante dabei um eine Drehachse, welche quer zur optischen Achse steht, in eine Richtung weg von der zu untersuchenden Probe bewegt. Anschließend kann die Blendenkante aus dem Beleuchtungslichtbündel heraus in die Referenzposition bewegt werden. Durch das Drehen wird die Blendenkante etwa parallel zur optischen Achse in Richtung zur Lichtquelle hin bewegt. Für den Fall, dass sich die Blendenkante in der unbekannten Ausgangsposition außerhalb des Gehäuses befindet, wird somit die Blendenkante zunächst entlang der optischen Achse durch die Durchgriffs-öffnung in das Gehäuse hinein bewegt, ohne mit dem Gehäuse oder der Halteeinrichtung zusammenzustoßen.

Bei einer weiteren bevorzugten Variante des erfindungsgemäßen Verfahrens wird, wenn die Blendenkante durch die Durchgriffsöffnung in den Probenauflagetisch bewegt worden ist und mit den Mitteln zum Feststellen der Anwesenheit eines Probenauflagetischs festgestellt wird, dass der Probenauflagetisch entfernt wird, die Blendenkante in das Gehäuse zurückbewegt. In einer Situation, wo die Blendenkante aus dem Gehäuse ausgefahren ist, aber kein Probenauflagetisch aufgesetzt ist, besteht das Risiko, dass ein Benutzer sich an der Blendenkante verletzt.

Diese Gefahr wird gebannt, indem die Blendenkante automatisch in das Gehäuse hinein zurückbewegt wird.

Alternativ ist bei einer ebenfalls bevorzugten Variante des erfindungsgemäßen Verfahrens vorgesehen, dass, wenn die Blendenkante durch die Durchgriffsöffnung in den Probenauflagetisch bewegt worden ist und mit den Mitteln zum Feststellen der Anwesenheit eines Probenauflagetischs festgestellt wird, dass der Probenauflagetisch entfernt wird, ein Bewegen der Blendenkante blockiert wird. Auch hierdurch wird das Risiko von Verletzungen durch die Blendenkante verringert.

Besonders bevorzugt sind Mittel zum Abfragen einer Mikroskopeinstellung und/oder einer Mikroskopkonfiguration vorhanden. Einstellungen der mindestens einen Blendenkante, weiterer Blenden und/oder weiterer optischer Komponenten werden dann abhängig von einer festgestellten Konfiguration von vorhandenen, insbesondere optischen, Komponenten, automatisiert vorgenommen. Beispielsweise kann automatisch erkannt werden, welches Objektiv aktiv und welche Zoomstellung eingestellt ist.

Bei einem erfindungsgemäßen Mikroskopsystem ist hierzu zweckmäßig eine Speichereinrichtung vorhanden, in welcher Einstellungen der Durchlichteinrichtung und des Lichtmikroskops, insbesondere der mindestens einen Blendenkante, abgespeichert werden.

Bei einem bevorzugten Ausführungsbeispiel des erfindungsgemäßen Verfahrens ist vorgesehen, dass eine Mikroskopeinstellung und/oder eine Mikroskopkonfiguration abgefragt werden, dass an Hand der Mikroskopeinstellung und/oder der Mikroskopkonfiguration eine optimale Blendenposition bestimmt wird, dass eine Anwesenheit eines Probenauflagetischs, eine Anwesenheit von in den Probenauflagetisch eingesetztem Zubehör und/oder eine Anwesenheit einer Adapterplatte festgestellt werden und daraus ein verfügbarer Bewegungsraum der Blendenkante in Richtung der optischen Achse ermittelt wird und dass die Blendenkante im verfügbaren Bewegungsraum möglichst nah an der optimalen Blendenposition positioniert wird. Unter möglichst nah ist zu verstehen, dass die Blendenkante an der optimalen Blendenposition positioniert wird, wenn die optimale Blendenposition im verfügbaren Bewegungsraum liegt, und dass, wenn die optimale Blendenposition außerhalb des verfügbaren Bewegungsraums liegt, die Blendenkante an einem zur optimalen Blendenposition benachbarten Ende des verfügbaren Bewegungsraums positioniert wird.

Eine Mikroskopkonfiguration umfasst zweckmäßig mindestens einen Typ eines Zoomsystems und/oder eines ausgewählten Objektivs.

Eine Mikroskopeinstellung beinhaltet zweckmäßig mindestens eine Zoomvergrößerung und/oder eine Position eines ausgewählten Objektivs.

Bei Kenntnis des verwendeten Objektivs, eines verwendeten Zoomkörpers und einer mit dem Zoomkörper eingestellten Vergrößerung kann die Blendenkante an eine optimale Position bewegt werden, welche für die verwendete Objektiv-Zoomkörper-Kombination vorab bestimmt und gespeichert worden sein kann. Die optimale Position kann insbesondere in Richtung der optischen Achse der Lage der wirksamen Eintrittspupille entsprechen. An dieser weist der Beleuchtungsstrahlengang des Lichtmikroskops eine Taille auf.

Die optimale Blendenposition kann für die jeweilige Mikroskopeinstellung und/oder Mikroskopkonfiguration abgespeichert sein und beispielsweise durch Ausprobieren ermittelt worden sein. Als Bewertungskriterium einer optimalen Blendenposition können unterschiedliche Beleuchtungsparametern dienen, insbesondere eine Beleuchtungshomogenität, ein Bildkontrast und/oder ein Schattenwurf im Mikroskopbild.

In einer erfindungsgemäßen abgewandelten Variante dieses Ausführungsbeispiels kann zusätzlich ein Prismenfilm in den Strahlengang eingebracht werden. Dieser umfasst eine Vielzahl an Prismen, mit denen das Beleuchtungslichtbündel in einer bekannten Weise abgelenkt wird. Der Prismenfilm kann genau dann in den Strahlengang des Beleuchtungslichtbündels eingefahren werden, wenn die optimale Position außerhalb des verfügbaren Bewegungsraums liegt.

Bei dieser Variante des erfindungsgemäßen Verfahrens ist somit vorgesehen, dass eine Mikroskopeinstellung und/oder eine Mikroskopkonfiguration abgefragt werden, dass an Hand der Mikroskopeinstellung und/oder der Mikroskopkonfiguration eine optimale Blendenposition bestimmt wird, dass die Anwesenheit eines Probenauflagetischs, die Anwesenheit von in den Probenauflagetisch eingesetztem Zubehör und/oder die Anwesenheit einer Adapterplatte festgestellt werden und daraus ein verfügbarer Bewegungsraum der Blendenkante in Richtung der optischen Achse ermittelt wird, dass überprüft wird, ob die optimale Blendenposition innerhalb des verfügbaren Bewegungsraums liegt, dass, wenn die optimale Blendenposition außerhalb des verfügbaren Bewegungsraums liegt, ein Prismenfilm in das Beleuchtungslichtbündel bewegt wird, und dass, wenn die optimale Blendenposition im verfügbaren Bewegungsraum liegt, die Blendenkante an der optimalen Blendenposition positioniert wird.

Weitere Vorteile und Merkmale der erfindungsgemäßen Vorrichtung, des erfindungsgemäßen Verfahrens und des erfindungsgemäßen Mikroskopsystems werden im Folgenden mit Bezug auf die Figuren erläutert: Hierin zeigen:

Fig. 1:  ein Mikroskopsystem nach dem Stand der Technik;

Fig. 2:  eine Skizze zur Erläuterung einer Durchlichteinrichtung nach dem Stand der Technik;

Fig. 3:  wesentliche Bestandteile des Strahlengangs bei einer erfindungsgemäßen Vorrichtung in einer Seitenansicht;

Fig. 4:  wesentliche Bestandteile des Strahlengangs bei einer erfindungsgemäßen Vorrichtung in einer Vorderansicht;

Fig. 5:  wesentliche Bestandteile des Strahlengangs bei einer erfindungsgemäßen Vorrichtung in einer Seitenansicht mit einer Blendenkante;

Fig. 6:  in einer Seitenansicht eine Situation, in welcher sich die Blendenkante von der Objektebene weiter entfernt befindet als die wirksame Eintrittspupille;

Fig. 7:  in einer Draufsicht die Situation aus Fig. 6;

Fig. 8:  in schematischer Darstellung ein Mikroskopbild, welches erhalten wird, wenn sich die Blendenkante zu weit weg von der Objektebene befindet;

Fig. 9:  ein Diagramm, in welchem die optimalen Positionen für die Blendenkante in Abhängigkeit des Zoomfaktors aufgetragen sind;

Fig. 10:  eine Perspektivansicht eines erfindungsgemäßen Mikroskopsystems mit einem Lichtmikroskop und einer erfindungsgemäßen Vorrichtung zur Durchlichtbeleuchtung;

Fig. 11:    ein Ausführungsbeispiel einer erfindungsgemäßen Vorrichtung mit einer Blende und aufgesetztem Probenauflagetisch;

Fig. 12:    ein vergrößerter Ausschnitt aus Fig. 11;

Fig. 13:    ein Ausschnitt einer erfindungsgemäßen Vorrichtung mit Mitteln zum Erkennen verschiedener Aufsätze, wobei eine zusätzliche Adapterplatte vorhanden ist;

Fig. 14:    ein Ausschnitt einer erfindungsgemäßen Vorrichtung mit Mitteln zum Erkennen verschiedener Aufsätze, wobei keine zusätzlichen Aufsätze vorhanden sind;

Fig. 15:    ein Ausschnitt einer erfindungsgemäßen Vorrichtung mit Mitteln zum Erkennen verschiedener Aufsätze, wobei eine Adapterplatte, ein Probenauflagetisch und eine Ringleuchte vorhanden sind;

Fig. 16:    ein Flussdiagramm eines erfindungsgemäßen Verfahrens zum Einstellen einer bestgeeigneten Beleuchtung für ein Lichtmikroskop;

Fig. 17:    eine schematische Perspektivansicht von vier Blenden einer erfindungsgemäßen Vorrichtung zur Durchlichtbeleuchtung und

Fig. 18 bis 22:    Schritte eines erfindungsgemäßen Verfahrens zur Bestimmung der Absolutposition einer Blendenkante einer erfindungsgemäßen Vorrichtung.

Gleiche und gleichwirkende Komponenten sind in den Figuren in der Regel mit denselben Bezugszeichen versehen. Hingewiesen wird außerdem auf die Bezugszeichenliste am Ende der Beschreibung.

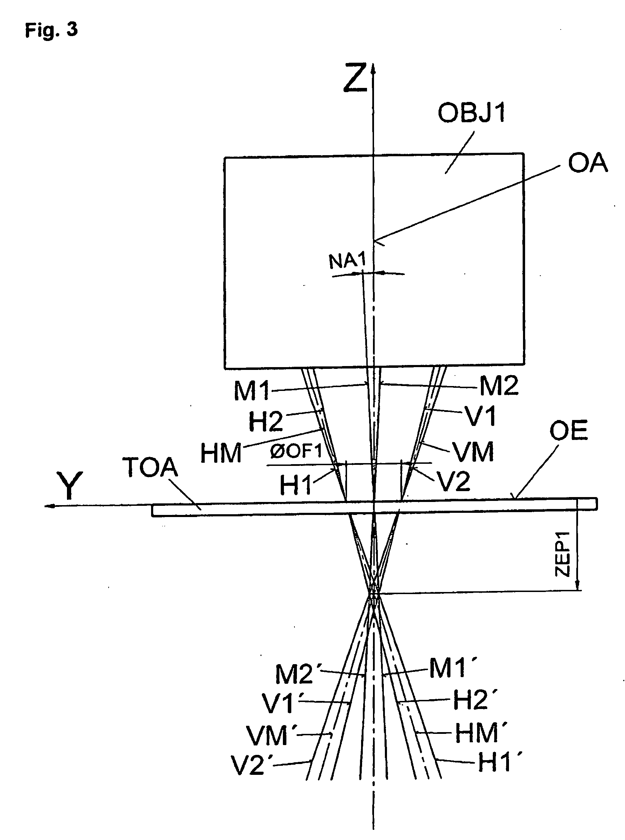

Figur 3 zeigt die Seitenansicht des Strahlengangs mit dem Objektiv OBJ1 aus Figur 1, das zusammen mit dem in Figur 3 nicht dargestellten motorisierten Zoomkörper MZK und dem aktuell wirksamen Zoomfaktor β eine numerische Apertur NA1, einen Objektfelddurchmesser OF1 in der Objektebene OE und eine Z-Koordinate der Eintrittspupille ZEP1 aufweist. Das Koordinatensystem entspricht dabei dem aus Figur 1.

Aus den bekannten Daten von verschiedenen Objektiven OBJ1, OBJ2, OBJ3 lassen sich die abbildungsseitigen Randstrahlen jeweils in Kombination mit eine motorisierten Zoomkörper MZK, abhängig vom Zoomfaktor β, zusammen mit der Rückprojektion dieser abbildungsseitigen Randstrahlen in den Beleuchtungsraum ermitteln und darstellen.

Ausgehend von der Objektebene OE sind die Grenzlichtstrahlen eingezeichnet, die für die Beschreibung der Abbildung durch das dargestellte Objektiv OBJ1 besonders relevant sind.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor β repräsentieren. Entsprechend gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor β kennzeichnen. VM ist der mittlere Lichtstrahl.

In der praktischen Anwendung gibt es in der Regel eine transparente Objektauflage TOA, die aufgrund der Brechzahlunterschiede und Dicke einen Strahlversatz, also eine Verlängerung der tatsächlich wirksamen optischen Abstände erzeugt. Daher müssen sowohl die optische Wirksamkeit der transparenten Objektauflage TOA mit einer Dicke DG und einer Brechzahl nG, als auch die entsprechenden optischen Eigenschaften des Objektes OB mit einer Objekthöhe OH und einer Brechzahl nO berücksichtigt werden. Lokale Krümmungen des Objekts OB und/oder Brechzahlschwankungen, zum Beispiel durch Luftblaseneinschlüsse, führen ebenfalls zu einer Änderung des optischen Wegs und sind im Prinzip zu berücksichtigen.

Somit existiert ein Strahlversatz SV in Z-Richtung, der aufgrund der bekannten Eigenschaften von TOA, nämlich Dicke und Brechzahlübergänge und bei Vernachlässigung der Eigenschaften des Objektes OB leicht berechnet werden kann.

In Luft gilt die Formel

$$SV = DG * (nG-1) / nG$$

Bei einer typischen Dicke von zum Beispiel DG=4mm und nG=1.5 ergibt sich hieraus ein Strahlversatz SV = 1,3mm.

Diese Berechnung gilt allerdings nur für eine idealisierte transparente Objektauflage TOA ohne Objekt OB und setzt die bekannten optischen Daten voraus. In der praktischen Anwendung ist das Objekt OB häufig durch weitere Medien umgeben, zum Beispiel Petrischalen mit Nährlösungen, und es ist gegebenenfalls selbst optisch inhomogen und/oder mit lokal gekrümmten Oberflächen oder Einschlüssen versehen, so dass die Zusammenhänge noch komplizierter werden. Die oben angegebene Vereinfachung führt zu Fehlern, die in vielen Fällen nicht vernachlässigbar sind. Deshalb lässt sich der Strahlversatz SV meistens nicht korrekt berechnen. Berücksichtigt man dass die Objektauflage TOA eine nicht zu vernachlässigende Dicke DG, das Objekt OB eine optisch wirksame Dicke hat und bei gewöhnlichen Zoommikroskopen die Pupille keine wohldefinierte ebene Fläche ist, ergibt sich eine wirksame Eintrittspupille, deren Abstand von der Objektebene OE Zh1 gegenüber der Z-Koordinate der idealisierten Eintrittspupille ZEP1 verschoben ist. Das bedeutet, dass auch Zh1 in der Regel nicht genau bekannt ist und empirisch ermittelt werden muss.

Statt des in Figur 3 dargestellten Objektivs OBJ1 kann auch eines der Objektive OBJ2 oder OBJ3 aus Figur 1 verwendet werden. Diese weisen zusammen mit dem motorisierten Zoomkörper MZK und dem aktuell wirksamen Zoomfaktor $\beta$ eine andere numerische Apertur, einen anderen Objektfelddurchmesser in der Objektebene OE und eine andere Z-Koordinate der Eintrittspupille auf. Bedingt durch die in der Stereomikroskopie und Makroskopie typischen kostenoptimierten Objektiv-Zoomkörper-Kombinationen OBJ1 mit MZK, OBJ2 mit MZK und OBJ3 mit MZK gibt es keine auskorrigierten und über den Zoombereich feststehenden Pupillenebenen und keine garantierte Eignung für polarisationsoptische Verfahren. Der Wert von ZEP1 und die entsprechenden Werte ZEP2 und ZEP3 (in Figur 3 nicht dargestellt) der zweiten und dritten Objektiv-Zoomkörper-Kombination OBJ2 mit MZK und OBJ3 mit MZK liegen entsprechend weit auseinander und wandern mit dem Zoomfaktor $\beta$ in der Regel unterschiedlich stark. Bei Nutzung eines codierten Objektivwechslers COW gemäß Figur 1 kann für verschiedene Objektive OBJ1, OBJ2 und OBJ3 in einem Stereomikroskop-System ein identisches Objekt OB auf einer identischen transparenten Objektauflage TOA vorausgesetzt werden, so dass auch Zh1 und die entsprechenden Werte Zh2 und Zh3 (in Figur 3 nicht dargestellt) der zweiten und dritten Objektiv-Zoomkörper-Kombination OBJ2 mit MZK und OBJ3 mit MZK entsprechende Unterschiede aufweisen. Aufgrund der nicht eindeutig definierten Pupillenlagen Zh1 sind die Unterschiede nicht zwingend identisch.

Außerdem gibt es an den beschriebenen typischen kostenoptimierten ObjektivZoomkörper-Kombinationen OBJ1 mit MZK, OBJ2 mit MZK und OBJ3 mit MZK keine definierten und beim Zoomen feststehenden Eintrittspupillen. Die Realisierung einer solchen Forderung hätten das Optikdesign und die Objektivkonstruktion deutlich erschwert, was mindestens zu einer Verteuerung der Objektive und einer gegebenenfalls nicht akzeptablen Baugröße geführt hätte, sofern sich überhaupt eine Lösung hierfür finden lässt. Somit gibt es praktisch keine ebenen ortsfesten Eintrittspupillen mit den üblichen minimierten Abbildungsfehlern. Die Eintrittspupillen sind somit stark deformiert und wandern bei Variation des Zoomfaktors $\beta$ und die Lage der Eintrittspupillen hängt stark von der Lichtwellenlänge ab.

Bei einem durch den rechten Kanal R des Objektivs OBJ1 mit der Anordnung gemäß Figur 3 aufgenommenes Bild ist der Kontrast ohne weitere Mittel sehr schwach, Strukturen und/oder Phasenunterschiede sind so gut wie nicht erkennbar. Das Bild weist dafür eine sehr gute Homogenität hinsichtlich der Helligkeit auf.

Durch die Bereitstellung einer in Richtung der optischen Achse des Beobachtungssystems verschiebbaren Blende im Körper der Durchlichthaube kann die Erkennbarkeit von Strukturen und/oder Phasenunterschieden verbessert werden. Die Blende lässt sich bei verschiedenen Zoomstellungen auf die Position der wirksamen Eintrittspupille des optischen Systems einstellen. Durch eine Verschiebung quer zur optischen Achse lassen sich verschiedene Kontrasteffekte erreichen.

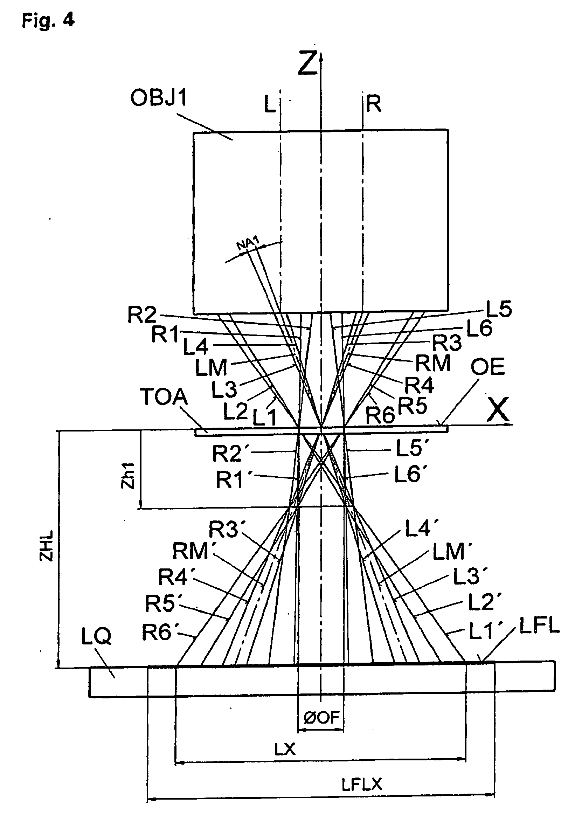

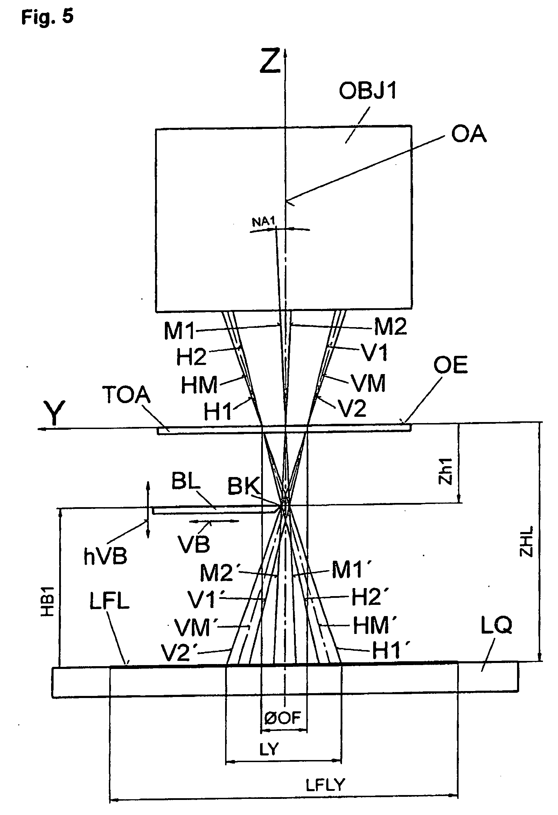

Figur 4 zeigt die Vorderansicht, Figur 5 die Seitenansicht von links einer erfindungsgemäßen Anordnung. In Figur 5 sind ausgehend von der Objektebene OE oder von der Oberseite der transparenten Objektauflage TOA die GrenzLichtstrahlen eingezeichnet, die für die Beschreibung der Abbildung durch das dargestellte Objektiv OBJ1 besonders relevant sind. Mit R1 bis R6 sind in Figur 4 rechte Lichtstrahlen und mit L1 bis L6 linke Lichtstrahlen gekennzeichnet.

Vom hinteren Objektfeldrand gehen die Lichtstrahlen H1 und H2, sowie der mittlere Lichtstrahl HM aus, wobei die Lichtstrahlen H1 und H2 die theoretischen Aperturbegrenzungen des dargestellten Objektivs OBJ1 bei dem gerade wirksamen Zoomfaktor $\beta$ repräsentieren. Mit NA1 ist die Objektivapertur des Objektivs OBJ1 in den Figuren 4 und 5 bezeichnet.

Analog hierzu gehen die Lichtstrahlen V1, V2 und VM vom vorderen Objektfeldrand aus, wobei V1 und V2 die theoretischen Aperturbegrenzungen des dargestellten Objektivs OBJ1 bei dem gerade wirksamen Zoomfaktor V1 und V2 kennzeichnen. VM ist der mittlere Lichtstrahl.

Alle in den Beleuchtungsraum zurückprojizierten Lichtstrahlen behalten ihren Namen. Als Merkmal zur Berücksichtigung des Strahlversatzes SV wird jeweils nur ein Hochkomma ergänzt. Aus den mittleren Lichtstrahlen im Abbildungsraum VM und HM resultieren bei Berücksichtigung des Strahlversatzes durch die transparenten Objektauflage TOA somit die in den Beleuchtungsraum zurückprojizierten Lichtstrahlen VM' und HM'. Mit M1 und M2 sind in Figur 5 mittlere Lichtstrahlen bezeichnet.

Erfindungsgemäß ist eine verstellbare Blende BL mit einer Blendenkante BK im Bauraum zwischen der Objektebene OE oder der Oberseite der transparenten Objektauflage TOA und der Leuchtfläche LFL einer Lichtquelle LQ angeordnet. Diese Blende BL lässt sich in der Höhe, das heißt entlang der Verschieberichtung hVB, so einstellen, dass die Blendenkante BK in einer idealen Z-Blendenlage Zh1 für das aktuell aktive Objektiv OBJ1 in Kombination mit einem Zoomkörper MZK, an dem ein aktueller Zoomfaktor $\beta$ eingestellt ist, liegt. In Figur 5 ist erkennbar, dass diese Einstellung bereits erfolgt ist, wobei dies nur eine idealisierte Darstellung zur Verdeutlichung des Prinzips ist.

Wie bereits ausgeführt, sind die Eintrittspupillen der meisten Objektive an Zoomsystemen hauptsächlich aus Kostengründen nicht ortsfest und unterliegen keinen speziellen Qualitätsvorgaben. Dies führt dazu, dass die Lage und Form der Eintrittspupille dann nicht klar definiert ist, sie ist zum Teil auch stark abhängig von der Lichtwellenlänge. Der reale Strahlengang ist also deutlich komplexer und entsprechend kompliziert darzustellen. Zur Beschreibung der prinzipiellen Wirkungsweise wird daher nur der idealisierte Strahlengang verwendet.

Wegen der oben erläuterten komplexen Verhältnisse und weiteren unbekannten Einflüssen des Objektes OB und seiner Umgebung, wie zum Beispiel die transparente Objektauflage TOA, Petrischale mit Nährlösung, sind praktische Versuche zur Ermittlung und/oder Einstellung der idealen Z-Blendenlage Zh1 unerlässlich. Hauptsächlich wegen der unbekannten Einflüsse des Objektes OB und seiner Umgebung wird vorzugsweise ein geeignetes Bedienelement, zum Beispiel ein Adjust-Scrollrad SADJ, zur kundenseitigen Variation der Blendenlage senkrecht zur Objektebene OE vorgesehen.

Die ideale Blendenlage ist dadurch gekennzeichnet, dass mindestens eine Blende BL mit mindestens einer linear verlaufenden Blendenkante BK zwischen der Lichtquelle LQ und der Objektebene OE parallel zur Flächennormalen der Objektebene OE in der Richtung hVB und in mindestens einer hierzu senkrecht angeordneten Richtung VB frei positionierbar ist, so dass die Blende BL mit Blendenkante BK durch die Bewegung in Richtung hVB der Flächennormalen der Objektebene OE zur Homogenisierung der Beleuchtung in eine ideale Blendenposition Zh1 gebracht werden kann, in der sie optimal an das aktuell wirksame Abbildungssystem angepasst werden kann. Das Abbildungssystem umfasst einen Zoomkörper MZK mit dem aktuellen Zoomfaktor β, ein Objektiv OBJ1, ein Objekt OB und gegebenenfalls eine transparente Objektauflage TOA. Die Kontraststärke lässt sich durch das Verschieben der Blende BL mit Blendenkante BK senkrecht zur Flächennormalen der Objektebene OE in Richtung VB einstellen, wobei die Blendenkante BK parallel zur Objektebene OE und senkrecht zur Verschieberichtung VB für die Kontraststärkevariation orientiert ist. Prinzipiell sind keine weiteren Mittel zur Homogenisierung der Beleuchtung vorgesehen oder erforderlich.

Bei eingestellter idealer Z-Blendenlage Zh1 ist der Abstand zwischen der Leuchtfläche LFL und der Blende BL dann HB1, der Abstand ZHL ergibt sich gemäß Figur 5 aus ZHL = Zh1 - HB1.

In den Figuren 4 und 5 ist erkennbar, dass die Leuchtfläche LFL der Lichtquelle LQ eine Ausdehnung LFLX in X-Richtung und LFLY in Y-Richtung hat. Für eine vignettierungsfreie homogene Abbildung über das dargestellte Objektiv OBJ1 bei dem gerade wirksamen Zoomfaktor β werden aber nur die Leuchtflächenausdehnungen LX in X-Richtung und LY in Y-Richtung benötigt.

Idealerweise werden die Leuchtfeldabmaße LFLX und LFLY mindestens so groß gewählt, dass für jedes vorhandene Objektiv unter allen vorkommenden Abbildungsbedingungen eine vignettierungsfreie homogene Ausleuchtung möglich ist. Die Form der Leuchtfläche kann hierbei auch an die tatsächlich wirksame Rückprojektion der Lichtstrahlen angepasst werden, dann ergibt sich näherungsweise eine Ellipse mit großer Halbachse in der X-Richtung bei 3D-Beobachtung oder ein Kreis bei 2D-Beobachtung. Mit 2D-Beobachtung ist hierbei die einkanalige Beobachtung der Probe gemeint, mit 3D-Beobachtung entsprechend die Beobachtung mit zwei Kanälen.

Durch die Bewegung der im Abstand Zh1 von der Objektebene OE oder von der Oberseite der transparenten Objektauflage TOA positionierten Blende BL in der Verschieberichtung VB lässt sich die Blende BL mit der Blendenkante BK so in den Beleuchtungsstrahlengang bringen, dass bestimmte Lichtstrahlen ausgeblendet werden können. Die Blende wird vorzugsweise entlang der Y-Achse bewegt, da sie dann für den linken Kanal L und den rechten Kanal R gleichmäßig wirkt. In Figur 4 ist erkennbar, dass eine Bewegung der (nicht dargestellten) Blende im Abstand Zh1 in der X-Richtung nicht die Lichtstrahlen beider Kanäle gleichmäßig ausblenden würde, die Folge wäre eine für 3D-Abbildungen ungeeignete Ausleuchtung. Wird die Blende BL mit der Blendenkante BK gemäß Figur 5, das heißt durch Bewegung im Abstand Zh1 von der Objektebene OE oder von der Oberseite der transparenten Objektauflage TOA in der Verschieberichtung VB, in den Beleuchtungsstrahlengang gebracht, wirkt sie nicht nur auf beide Kanäle gleichmäßig, sondern auch auf alle Punkte des Objektfelds.

Gemäß der Anordnung der Blende BL in Figur 5 berührt die Blendenkante BK die rückprojizierten Lichtstrahlen V2' und H2', die von gegenüberliegenden Objektfeldrändern ausgehen. Somit werden auch alle rückprojizierten Lichtstrahlen zwischen den gegenüberliegenden Objektfeldrändern von der Blendenkante BK berührt. Wird die Blende BL weiter in den Beleuchtungsstrahlengang eingeschoben, resultiert daraus eine gleichmäßige Abdeckung von beleuchtenden Lichtstrahlen über das Objektfeld, das heißt die Beleuchtung bleibt bei abnehmender Helligkeit homogen, wobei der Kontrast deutlich zunimmt. Dies wurde durch praktische Versuche bestätigt.

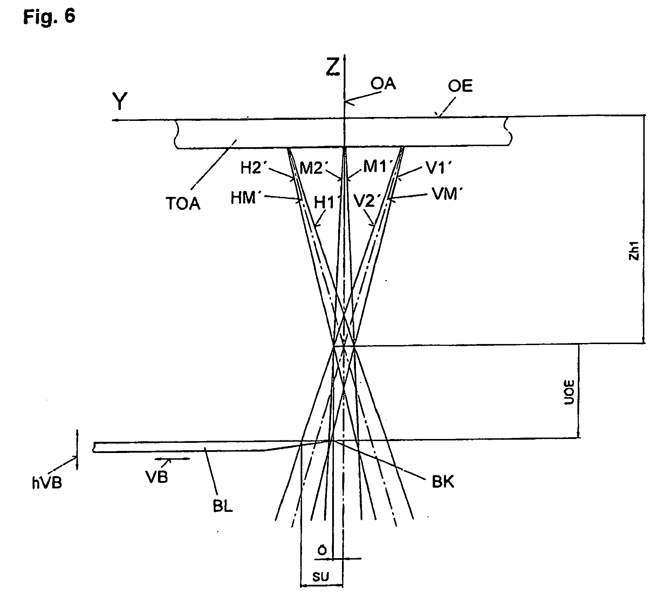

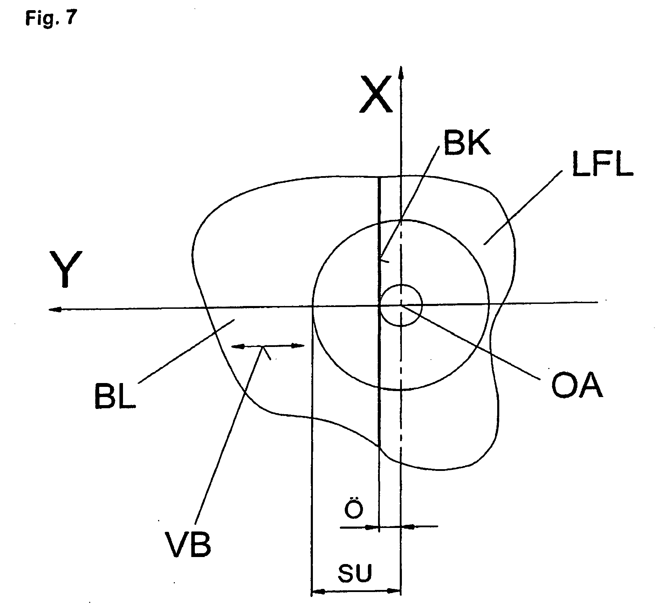

Die Figuren 6 und 7 zeigen Detailansichten der erfindungsgemäßen Vorrichtung zur Durchlichtbeleuchtung, wobei sich die Blendenkante BK in Richtung VB parallel zur Objektebene OE am Rand des Strahlquerschnitts, der durch den Öffnungsabstand Ö als Radius des Strahlquerschnitts in Höhe der idealen Z-Blendenlage Zh1 um die optische Achse OA gekennzeichnet ist, befindet. Allerdings ist nicht die ideale Z-Blendenlage Zh1 eingestellt, da die Blende BL mit der Blendenkante BK in der Einstellrichtung hVB um den Verschiebeweg UOE zu weit weg von der Objektebene OE verschoben ist. Dadurch werden die Lichtstrahlen V1', VM' und V2' vollständig ausgeblendet. Da alle diese Lichtstrahlen den vorderen Objektfeldrand ausleuchten sollen und nahezu keine weiteren Lichtstrahlen zur Ausleuchtung der anderen Objektfeldregionen ausgeblendet werden, erscheint nur der vordere Objektfeldrand dunkel, das heißt das Bild wird hinsichtlich der Helligkeit inhomogen.

Um die Blendenkante BK nur an den äußeren Rand des Strahlquerschnitts in der von der idealen Z-Blendenlage Zh1 abweichenden eingestellten Blendenlage Zh1 + UOE anzulegen, müsste sie weiter auf den Öffnungsabstand SU geöffnet werden. Da sich die Blende BL mit der Blendenkante BK dann aber nicht mehr in der idealen Z-Blendenlage Zh1 befinden würde, wäre die erfindungsgemäße Funktion des Kontrastverfahrens hierdurch nicht mehr gegeben.

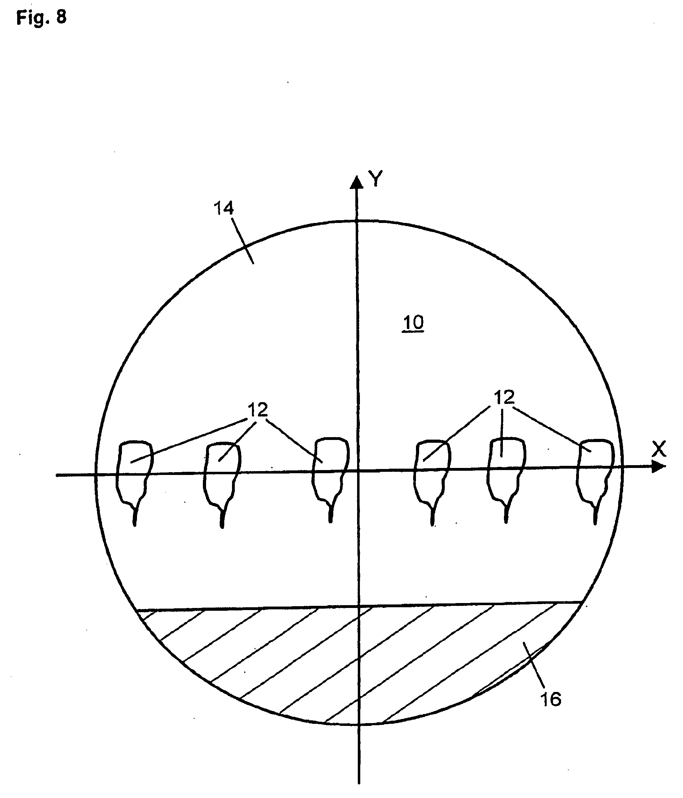

Figur 8 zeigt schematisch das Bild einer Kamera K, das durch das Objektiv OBJ1 mit der Anordnung gemäß den Figuren 6 und 7 aufgenommen wurde. Zur Orientierung sind die XY-Koordinatenachsen aus der Objektebene OE mit eingezeichnet.

Das von der Kamera gesehene Bild in Figur 8 ist mit dem Bezugszeichen 10 und die Probe OB mit dem Bezugszeichen 12 gekennzeichnet. Wenn sich die Blendenkante BK weiter als die Eintrittspupille von der Objektebene entfernt ist, dunkelt sich das Bild von der negativen y-Richtung her ein. Die Heiligkeitsunterschiede sind im Bild der Kamera K in Fig. 8 schematisch dargestellt. Der untere Bildrand 16, das heißt der vordere Bereich des Objektfeldes im negativen Halbraum der Y-Achse, erscheint dunkel. Zum oberen Bildrand 14 hin wird das Bild heller.

Die durch die Abweichungen gegenüber der idealen Blendenposition Zh1 verursachten Helligkeitsinhomogenitäten, die im Bild der Objektebene OE parallel zur Einstellrichtung VB der Blende BL sichtbar sind, lassen sich durch einen Helligkeitsgradienten beschreiben, der eine Richtungsangabe, beschreibbar über ein Vorzeichen, und einen Zahlenbetrag umfasst. Beispielsweise erhält der Helligkeitsgradient ein negatives Vorzeichen, wenn sich die Blende BL zu nah an der Objektebene OE befindet und ein positives Vorzeichen, wenn die Blende BL zu weit von der Objektebene OE entfernt liegt. Der Zahlenbetrag kennzeichnet den Grad der Abweichung, das heißt ein zunehmender Zahlenbetrag beschreibt eine zunehmende Abweichung von der idealen Z-Blendenlage Zh1. Somit lässt sich das Ziel der Einstellung der idealen Z-Blendenlage Zh1 dadurch erreichen, dass der Zahlenbetrag minimiert wird, wobei das Vorzeichen des Helligkeitsgradienten die Information für die erforderliche Bewegungsrichtung zur Reduzierung des Zahlenbetrags liefert.

Die erfindungsgemäßen Vorteile werden in besonderer Weise erreicht, wenn die Blendenkante in einer Ebene der wirksamen Eintrittspupille des Objektivs positioniert ist. Die Erfindung stellt insbesondere ein Verfahren bereit, mit dem diese Position, die auch als optimale Position bezeichnet werden kann, gefunden und eingestellt werden kann. Dabei wird eine Position der Blendenkante bestimmt, indem zunächst die Position der Blendenkante in Richtung der optischen Achse des Objektivs variiert wird und für jede Position der Blendenkante in Richtung der optischen Achse ein Mikroskopbild mindestens teilweise aufgenommen wird. Sodann wird für jedes Mikroskopbild ein Beleuchtungsparameter bestimmt und als eine optimale Position der Blendenkante oder als Position der Blendenkante in der Ebene der wirksamen Eintrittspupille wird diejenige Position der Blendenkante in Richtung der optischen Achse festgelegt, bei der ein Verlauf des Beleuchtungsparameters aufgetragen gegen die Position der Blendenkante in Richtung der optischen Achse eine vorbestimmte Charakteristik aufweist. Die so festgelegte Position kann abgespeichert werden und die Blendenkante kann in die so gefundene Position bewegt werden.

Diese Charakteristik kann dann für jede relevante Zoomstellung des Mikroskops aufgenommen werden. Zwischenbereiche können später interpoliert werden.

Als Beleuchtungsparameter wird bevorzugt eine Größe gewählt, welche ein Maß ist für einen Intensitäts- oder Helligkeitsgradienten in einer Richtung quer zur Blendenkante, einen lokalen Bildkontrast, einen lokalen Kontrastumfang des Bilds, eine lokale Bildhomogenität und/oder einen lokalen Schattenwurf im Mikroskopbild.

Grundlage dieser Bestimmung der optimalen Position der Blendenkante ist, dass bei Positionierung der Blendenkante in der Eintrittspupille alle zur Abbildung beitragenden Beleuchtungslichtbündel prinzipiell gleich von der Blendenkante beeinflusst werden, indem diese beispielsweise einseitig bestimmte Strahlen jedes Beleuchtungslichtbündels herausnimmt. Im Unterschied dazu werden bei einer Position der Blendenkante außerhalb der Ebene der Eintrittspupille unterschiedliche Lichtbündel auch unterschiedlich beeinflusst. Beispielsweise werden bestimmte Lichtbündel ganz ausgeblendet, was im Bild konsequenterweise als dunkle Stelle sichtbar ist. Die ideale Position der Blendenkante zeichnet sich deshalb dadurch aus, dass das Bild im Hinblick auf Helligkeit und Kontrast sehr homogen ist.

Bei einer besonders bevorzugten Ausführungsvariante wird demgemäß für jedes Mikroskopbild als Beleuchtungsparameter ein Intensitätsgradient bestimmt und die Blendenkante wird auf diejenige Position in Richtung der optischen Achse eingestellt, bei der ein Verlauf des Intensitätsgradienten aufgetragen gegen die Position der Blendenkante in Richtung der optischen Achse einen Nulldurchgang aufweist.

Um eine sinnvolle Abbruchbedingung für das Verfahren zu schaffen, kann für die Entscheidung, ob der Intensitätsgradient einen Nulldurchgang erfährt, abgefragt werden, ob der Intensitätsgradient kleiner ist als ein sinnvoll festzulegender Schwellwert. Der Schwellwert kann dabei von der konkreten optischen Konfiguration abhängen.

Die Mikroskopbilder werden dabei vorteilhafterweise mit einer Digitalkamera aufgenommen und der Beleuchtungsparameter, beispielsweise also der Intensitätsgradient, wird bestimmt durch Auswertung der von der Digitalkamera gelieferten Daten. Das kann mit einem in der Steuereinrichtung vorhandenen oder mit der Steuereinrichtung verbundenen Rechner durchgeführt werden.

Um das Verfahren zum Ermitteln der optimalen Position effektiv durchführen zu können, kann auf Grundlage eines Beleuchtungsparameters, der für eine zurückliegende Position der Blendenkante in Richtung der optischen Achse bestimmt wurde, eine nächstfolgende Position der Blendenkante in Richtung der optischen Achse festgelegt werden, wobei die nächstfolgende Position von der zurückliegenden Position umso weiter beabstandet ist, je größer der Betrag eines für die zurückliegende Position bestimmten Beleuchtungsparameters ist. Eine Richtung, in welcher die nächstfolgende Position von der zurückliegenden Position beabstandet ist, wird aus einem Vorzeichen des für die zurückliegende Position bestimmten Beleuchtungsparameters ermittelt.

Grundidee dieser Verfahrensvariante ist, dass man sich noch weit von der optimalen Position entfernt befindet, wenn der für eine zurückliegende Position festgestellte Beleuchtungsparameter betragsmäßig noch vergleichsweise groß ist. Um rasch zur optimalen Position zu gelangen, ist es dann zweckmäßig, die nächste Bestimmung des Beleuchtungsparameters für eine vergleichsweise weit beabstandete Position durchzuführen. Auf der anderen Seite befindet man sich schon sehr nahe an der optimalen Position, wenn der für eine zurückliegende Position festgestellte Beleuchtungsparameter betragsmäßig klein ist. In diesem Fall wird die nächstfolgende Position sehr dicht an den zurückliegenden Positionen liegen.

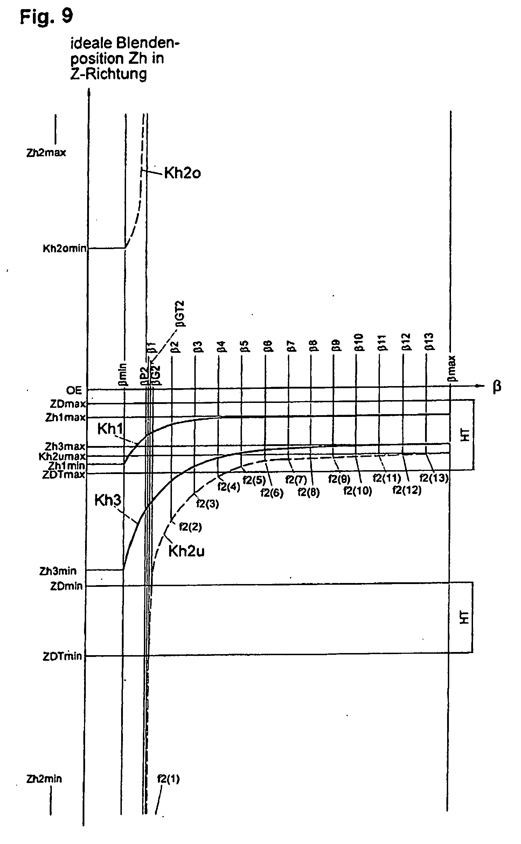

Figur 9 zeigt beispielhaft die ermittelten Kurven Kh1, Kh2o mit Kh2u und Kh3 für die idealen Z-Blendenlagen Zh zu den drei Objektiven OBJ1, OBJ2 und OBJ3 aus Figur 1 abhängig vom Zoomfaktor $\beta$ des verwendeten motorisierten Zoomkörpers MZK bezogen auf das XYZ-Koordinatensystem, dessen Ursprung in der Objektebene OE liegt. Die Kurven beginnen jeweils beim kleinsten Zoomfaktor $\beta$min und enden beim größten Zoomfaktor $\beta$max des verwendeten Zoomkörpers MZK aus Figur 1.

Mit f2(1), f2(2) bis f2(13) sind ideale Blendenposition in Z-Richtung für Vergrößerungen $\beta1$, $\beta2$ bis $\beta13$ angegeben, welche mit dem Objektiv OBJ2 am motorisierten Zoomkörper MZK bestimmt worden sind.

Ohne Probenauflagetisch liegen die idealen Z-Blendenlagen der beiden Kurven Kh1 und Kh3 der entsprechenden Objektive OBJ1 und OBJ3 bei typischer Kurvenform im XYZ-Koordinatensystem zwischen ZDmin und ZDmax, der dem Bereich entspricht, in dem eine höhenverstellbare Blende konstruktiv realisierbar ist. Diese Grenzen kennzeichnen also den innerhalb der erfindungsgemäßen Kontrasteinrichtung DL nutzbaren Bauraum für das erfindungsgemäße Kontrastverfahren. Die oberste Blendenposition ZDmax ergibt sich bei normaler Anwendung durch die transparente Objektauflage TOA in der Durchlichteinrichtung DL. Die Blende darf die transparente Objektäuflage TOA von unten auf keinen Fall berühren. Die unterste Blendenposition ZDmin resultiert aus der begrenzten Bauhöhe HER der Durchlichteinrichtung DL in Figur 1, die aus Ergonomiegründen unterhalb einer bestimmten Höhe bleiben muss. Das Gehäuse der Durchlichteinrichtung DL aus Figur 1 hat eine Höhe HER von ca. 100mm. Höher sollte eine Durchlichteinrichtung DL ohne weiteres Zubehör nicht sein.

Die minimalen idealen Z-Blendenlagen der Kurven Kh1 und Kh3 heißen Zh1min und Zh3min. Entsprechend heißen die maximalen idealen Z-Blendenlagen dieser Kurven Zh1max und Zh3max. Die minimale ideale Z-Blendenlage des oberen Kurvenabschnitts Kh2o ist mit Kh2omin gekennzeichnet und die maximale ideale Z-Blendenlage des unteren Kurvenabschnitts Kh2u mit Kh2umax.

Das Objektiv OBJ2 aus Figur 1 hat einen grundsätzlich anderen Kurvenverlauf, der typisch ist für bestimmte Objektive OBJ. In Figur 9 ist erkennbar, dass die Kurve für das Objektiv OBJ2 aus zwei Kurvenabschnitten Kh2o und Kh2u besteht. Zwischen diesen Kurvenabschnitten gibt es beim Zoomfaktor $\beta$P2 eine Polstelle, das heißt hier springt der Kurvenverlauf vom oberen Kurvenabschnitt Kh2o von plus Unendlich zum unteren Kurvenabschnitt Kh2u nach minus Unendlich.

Die minimalen und maximalen idealen Z-Blendenlagen der Kurvenabschnitte Kh2u und Kh2o, das heißt Zh2min und Zh2max, befinden sich somit im Unendlichen oder liegen praktisch so weit weg, dass die entsprechende ideale Z-Blendenlage konstruktiv nicht mehr eingestellt werden kann. Im oberen Kurvenabschnitt Kh2o ist die ideale Z-Blendenlage sowieso nicht erreichbar, da die Blende BL mit der Blendenkante BK oberhalb der Objektebene OE angeordnet werden müsste. Im unteren Kurvenabschnitt Kh2u lässt sich die ideale Z-Blendenlage erst ab dem Zoomfaktor $\beta$G2 sicherstellen, dann befindet sie sich gerade in der Grenzstellung ZDmin. Somit lässt sich das beschriebene Kontrastierungsverfahren zwischen den Zoomfaktoren $\beta$min und $\beta$G2 nicht mit allen Vorteilen anwenden, hierfür ist vorzugsweise ein anderes geeignetes Kontrastierungsverfahren zu ermitteln.

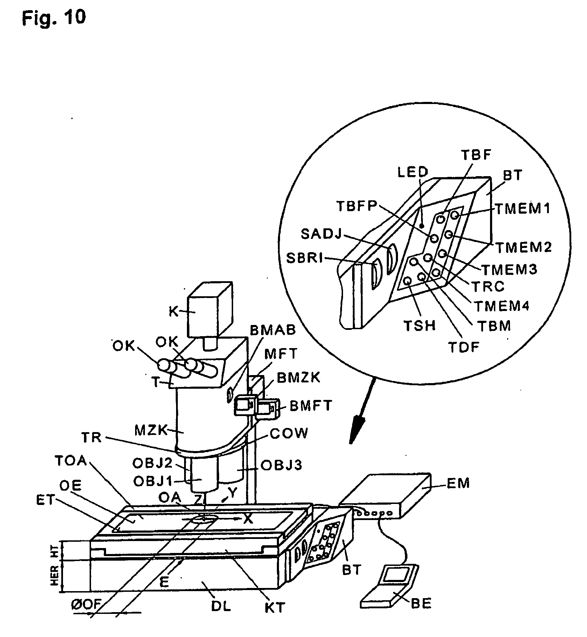

Zudem sind in Figur 9 optimale Blendenpositionen für ein Mikroskopsystem dargestellt, bei welchem auf die Vorrichtung zur Durchlichtbeleuchtung DL ein Probenauflagetisch KT aufgesetzt ist. Ein solches Mikroskopsystem wird zunächst mit Bezug auf Figur 10 beschrieben.

Figur 10 zeigt eine Perspektivansicht eines erfindungsgemäßen Mikroskopsystems mit einem Lichtmikroskop und einer erfindungsgemäßen Vorrichtung zur Durchlichtbeleuchtung. Die dargestellten Komponenten entsprechen denen aus Figur 1, wobei jedoch zusätzlich auf der Durchlichteinrichtung DL ein Probenauflagetisch KT oder kurz Tisch KT aufgesetzt ist. Es gelten hier die entsprechenden Bezugszeichen aus Figur 1.

Der Tisch KT stellt zusätzlichen Bauraum für Zubehör bereit. Beispielsweise kann innerhalb des Tischs KT eine Ringleuchte eingesetzt werden. Im Vergleich zur Lichtquelle LQ kann mit der Ringleuchte die Probe unter einem sehr großen Neigungswinkel beleuchtet werden, wodurch eine Dunkelfeld-Beobachtung besonders effektiv möglich ist.

Zum Montieren des Tischs KT an die Vorrichtung zur Durchlichtbeleuchtung weist diese Montagemittel auf, beispielsweise eine Form mit Ausnehmungen, in welche ein unterer Bereich des Tischs KT eingreift.

Durch den zusätzlichen Tisch KT verlagert sich die Objektebene OE von der Ebene E in die Ebene ET, das heißt um den Abstand HT nach oben. Da der Ursprung des XYZ-Koordinatensystems definitionsgemäß in der Objektebene OE liegt, verschiebt sich der Ursprung des XYZ-Koordinatensystems in Figur 10 gegenüber Figur 1 somit ebenfalls um den Abstand HT nach oben, das heißt in Richtung positiver Z-Werte.

In dem Diagramm aus Figur 9 zur idealen Blendenlage bedeutet dies, dass sich ohne weitere Maßnahmen der nutzbare Bauraum um denselben Betrag HT nach unten verlagert, das heißt in Richtung negativer Z-Werte. Bezogen auf das alte XYZ-Koordinatensystem gemäß Figur 1 bleiben die Grenzen ZDmin und ZDmax für den innerhalb der erfindungsgemäßen Vorrichtung zur Durchlichtbeleuchtung DL nutzbaren Bauraum erhalten. Die Koordinaten dieses nutzbaren Bauraums sind mit Tisch KT im neuen XYZ-Koordinatensystem gegenüber dem Koordinatensystem aus Fig. 1 ohne Tisch um HT nach unten verschoben. Die mögliche unterste ideale Z-Blendenlage ist mit Tisch also ZDTmin statt ZDmin ohne Tisch und die mögliche oberste ideale Z-Blendenlage ist mit Tisch ZDTmax statt ZDmax ohne Tisch.

Dadurch verändert sich unter Umständen auch die Anwendbarkeit des erfindungsgemäßen Kontrastverfahrens. Für dieses sind nur diejenigen Kurvenbereiche der Kurven Kh1, Kh2o, Kh2u und Kh3 nutzbar, die im oben genannten nutzbaren Bauraum liegen, das heißt in einem Bereich, in dem sich die Einstellung der idealen Z-Blendenlage konstruktiv realisieren lässt.

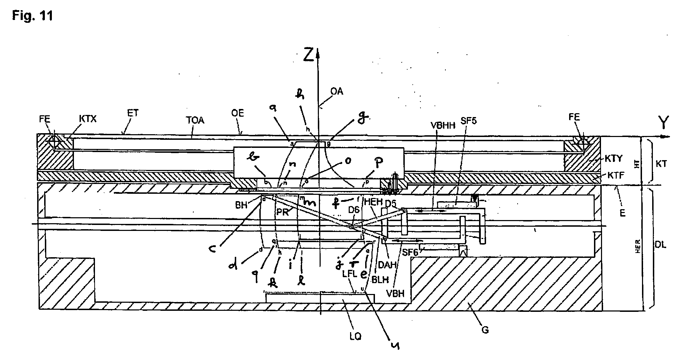

Der Bauraum innerhalb des Tischs KT, also der Z-Wertebereich zwischen ZDTmax und ZDmax, soll möglichst auch für die Blende nutzbar sein. Eine zu diesem Zweck ausgestaltete erfindungsgemäße Vorrichtung zur Durchlichtbeleuchtung wird im Folgenden mit Bezug auf Figur 11 beschrieben.

Figur 11 zeigt ein Ausführungsbeispiel einer erfindungsgemäßen Vorrichtung zur Durchlichtbeleuchtung DL. Diese ist in dem gemäß Figur 1 vom Benutzer aus gesehenen Rechtssystem, also X-Achse nach rechts, Y-Achse nach hinten, Z-Achse nach oben dargestellt. Die Vorrichtung DL weist eine Blende BLH mit einer linear in der X-Richtung verlaufenden Blendenkante BH auf. Die Blende BLH ist zwischen einer Lichtquelle LQ, deren Leuchtfläche LFL parallel zur XY-Ebene im negativen Z-Halbraum angeordnet ist, und der Objektebene OE angeordnet. Die Objektebene OE, an welcher sich eine zu untersuchende Probe befinden kann, bildet den Koordinatenursprung.

Die Blende BLH ist um eine Drehachse DAH, die parallel zur Blendenkante BH orientiert ist, an einem ersten Schlitten drehbar angeordnet, so dass die Blende BLH mit Blendenkante BH mitsamt der Drehachse DAH entlang einer Führungsbahn des ersten Schlittens in der Y-Richtung verschoben werden kann. Das verwendete Objektiv OBJ1 weist prinzipiell den Strahlengang aus Figur 3 auf. Es gelten weiterhin die Zusammenhänge, die bereits zu den Figuren 3 bis 8 beschrieben worden sind. Allerdings ist die entlang der Führungsbahn bewegliche Blende BLH für eine übersichtlichere Darstellung so weit in die negative Y-Richtung verschoben, dass sie in den Strahlquerschnitt aller zurückprojizierten Randstrahlen eingreift. Selbstverständlich lässt sich mit dieser erfindungsgemäßen Anordnung die Blendenkante BH in Y-Richtung auch an jeden Strahlquerschnitt anpassen, so dass die Blendenkante BH erfindungsgemäß wirken kann.

Die Blendenkante BH kann zur Homogenisierung der Beleuchtung über eine Bewegung der beiden Schlitten in der Y-Richtung mit überlagerter Relativbewegung der beiden Schlitten auch ohne Änderung der X- und Y-Blendenkoordinaten in eine Z-Blendenkoordinate gebracht werden, in der sie optimal an das aktuell wirksame Abbildungssystem, das einen Zoomkörper MZK mit dem aktuellen Zoomfaktor $\beta$ und ein Objektiv OBJ1 umfasst, angepasst ist. Das ist durch eine hinreichend homogene Ausleuchtung erkennbar. Die Blendenkante lässt sich dabei durch die synchrone Bewegung der beiden Schlitten entlang der Y-Richtung, das heißt parallel zur Objektebene OE, ebenfalls in der Y-Richtung und ohne Änderung der X- und Z-Blendenkoordinaten bewegen. Dadurch kann die Kontraststärke der Beleuchtung einstellbar werden.

Die Vorrichtung zur Durchlichtbeleuchtung DL weist außerdem Montagemittel für einen optionalen Tisch KT auf. Im dargestellten Beispiel ist mit diesen ein Tisch KT auf dem Gehäuse G der Vorrichtung zur Durchlichtbeleuchtung montiert. Die obere Gehäusewand G, das heißt die der Lichtquelle LQ gegenüberliegende Gehäusewand, weist eine Vertiefung als Halteeinrichtung für eine Probe in Höhe der Ebene E auf. Mit montiertem Tisch wird eine Halteeinrichtung TOA durch den Tisch KT in Höhe der Ebene ET bereitgestellt. Durch die spezielle Ausführung der Schlittenmimik ist die Blende BLH über die Ebene E der ursprünglichen Objektauflage hinaus in den Bauraum unterhalb des Tisches KT bewegbar. Typische Kurvenverläufe des Endes der Blendenkante BH bei reiner Rotation um DAH sind als Linien d-c, q-n-a, l-m-h und e-p dargestellt. Kombiniert mit einer seitlichen Verschiebung VBH lassen sich verschiedene Abdeckungen der Pupille, diesmal aber im Innenraum des Tischs KT, erreichen.

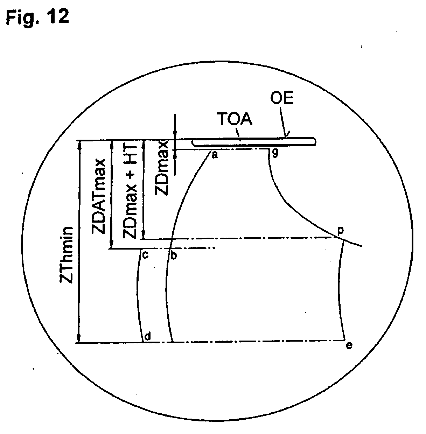

Figur 12 zeigt in vergrößerter Darstellung die Konturen der Fahrkurven der Blendenkante BH der erfindungsgemäßen Vorrichtung aus Figur 11. Die äußere Kontur des optisch wirksamen Bereiches der Blendenkante BH ist dabei gekennzeichnet durch die Kurvenpunkte d-c-b-a-g-p-e-d. Liegt die wirksame Pupille des Beobachtungssystems dicht unterhalb der transparenten Objektauflage TOA, kann die Blendenkante mit der erfindungsgemäßen Vorrichtung an diesen Punkt herangefahren werden. Konstruktionsbedingt stellt ZDmax die Z-Koordinate der obersten Blendenposition dar. Der Z-Wert wird hierbei von der Objektebene OE ausgehend gemessen. Um den Kontakt der Blende mit der transparenten Objektauflage TOA zu vermeiden, ist der Betrag von ZDmax geringfügig größer als die Dicke von TOA. Entsprechend stellt ZDATmax die maximale Z-Koordinate bei Verwendung einer Adapterplatte AP dar, während ZThmin die minimale Z-Koordinate der Blendenkante BH ist. Die größtmögliche Z-Koordinate ohne optionalen Tisch der Höhe HT ist in Figur 12 durch ZDmax + HT gekennzeichnet.

Bevorzugt ist eine zweite Blende (nicht dargestellt) vorhanden, welche zumindest in einem Bereich unterhalb von ZThmin, also unterhalb der Positionen d und e, bis zur Lichtquelle LQ positioniert werden kann. Ist nur eine einzige Blende vorhanden, so ist diese bevorzugt so angeordnet und bewegbar, dass ihre Z-Position im gesamten Bereich zwischen der Lichtquelle und der transparenten Objektauflage des optionalen Probenauflagetischs liegen kann.

Die Blendenkante BH lässt sich innerhalb der Durchlicht-Beleuchtungseinrichtung DL in Z-Richtung im freien Bauraum zwischen der Objektebene OE und der Lichtquelle LQ frei positionieren, siehe Figur 11. Aufgrund eines toleranzbedingten Sicherheitsabstands liegt die unterste tatsächlich realisierbare Blendenposition ZDmin knapp oberhalb der Leuchtfläche LFL mit der Z-Koordinate ZHL. Nach oben wird die oberste tatsächlich realisierbare Blendenposition ZDmax nicht nur durch die Dicke der transparenten Objektauflage TOA bestimmt, sondern auch durch die Höhe der optional einsetzbaren Adapterplatten AP, zum Beispiel Polarisationsfilter, inklusive der Auflage hierfür. Hierdurch wird die oberste tatsächlich realisierbare Blendenposition ZDmax mit einem entsprechenden toleranzbedingten Sicherheitsabstand nach unten verlegt.

Erfindungsgemäß sind keine weiteren Mittel zur Homogenisierung der Beleuchtung vorgesehen oder erforderlich.

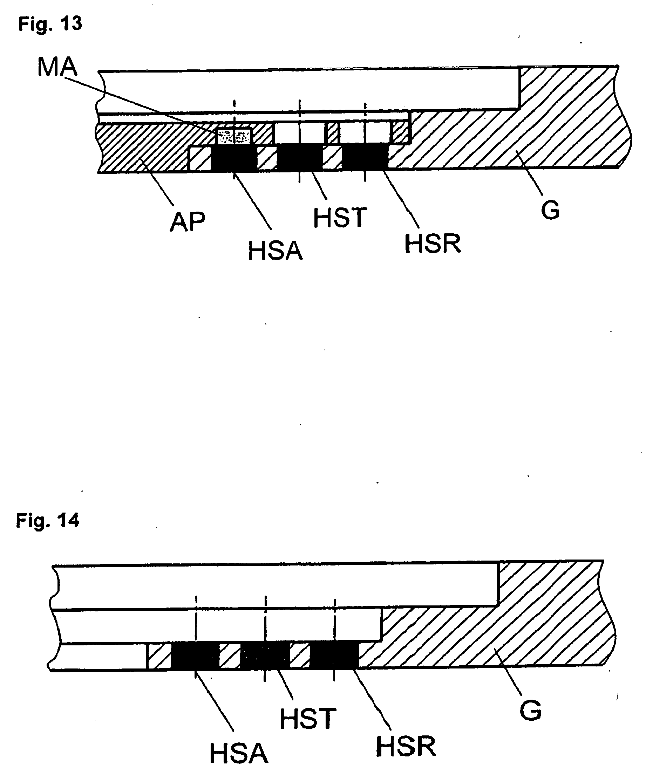

In den Figuren 13 bis 15 ist ein Ausschnitt des Gehäuses G der Vorrichtung zur Durchlichtbeleuchtung DL aus Figur 11 dargestellt. Dabei ist ein Bereich des Gehäuses G neben der Durchgriffsöffnung gezeigt. An dem Gehäuse G sind Mittel zur Erkennung verschiedener Aufsätze vorhanden. Diese umfassen zumindest Mittel HST zum Feststellen von Anwesenheit und insbesondere Identität eines Probenauflagetischs KT, Mittel HSA zum Feststellen von Anwesenheit und insbesondere Identität einer in die Durchgriffsöffnung eingesetzten Adapterplatte AP und Mittel HSR zum Feststellen von Anwesenheit und insbesondere Identität von in den Probenauflagetisch KT eingesetztem Zubehör wie einem Ringlicht RL. Diese Mittel HSA, HST, HSR sind im dargestellten Beispiel jeweils mit Hallsensoren HSA, HST, HSR gebildet.

Die Adapterplatte AP, der Tisch KT und das Ringlicht RL weisen Magnete MA, MT, MR auf, deren Anwesenheit durch die Hallsensoren HSA, HST, HSR festgestellt werden kann.

Wird beispielsweise eine Adapterplatte AP in die Durchlichthaube DL eingelegt, spricht Ober den darin enthalten Magneten MA der Hallsensor HSA an. Entsprechendes gilt, wenn der Tisch KT mit seinem Magneten MT dem Hallsensor HST gegenüberliegend eingebracht wird. Der Hallsensor HSR dient mit dem Magneten MR entsprechend der Detektion eines Ringlichtes RL.

Zur Befestigung des Magneten MR an der Ringleuchte RL ist ein Hilfsstift BZR an der Ringleuchte RL vorhanden. Entsprechend ist am Tisch KT ein Hilfsstift BZT zur Befestigung des Magneten MT am Tisch KT vorhanden.

Figur 13 zeigt ein Ausführungsbeispiel, bei dem eine Adapterplatte AP in die Durchgriffsöffnung eingesetzt ist. Ein Magnet MA der Adapterplatte AP ist dadurch über dem Sensor HSA positioniert, der somit die Anwesenheit und Identität der Adapterplatte AP erkennt. Weil in dieser Ausführung kein Ringlicht RL und auch kein Tisch KT vorhanden sind, werden die Sensoren HST und HSR nicht angesprochen.

In der in Figur 14 dargestellten Situation sind hingegen weder eine Adapterplatte AP, noch ein Tisch KT oder ein Ringlicht RL vorhanden. Folglich meldet keiner der Sensoren HSA, HST, HSR die Anwesenheit dieser Elemente.

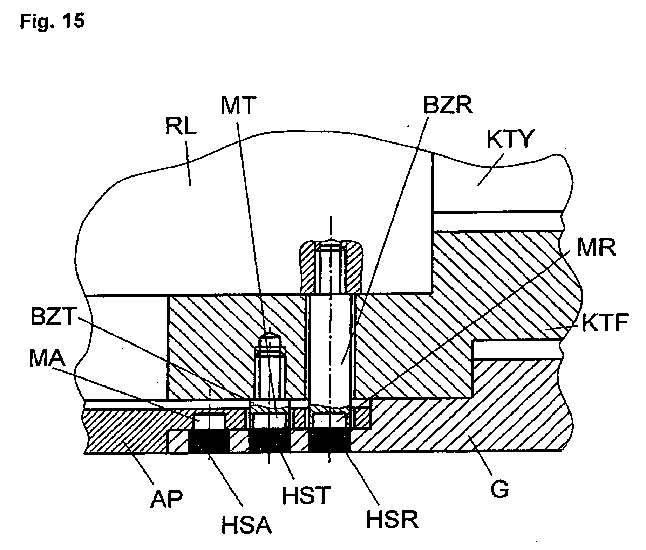

In dem in Figur 15 gezeigten Beispiel sind sowohl ein Tisch KT als auch ein Ringlicht RL und eine Adapterplatte AP vorhanden. Über deren Magnete MT, MR und MA registrieren die Hallsensoren HST, HSR und HSA die Anwesenheit von Tisch KT, Ringlicht RL und Adapterplatte AP. Der Tisch KT weist eine Grundplatte KTF mit einem Durchgang auf. Bei eingesetztem Ringlicht RL ragt der Magnet MR des Ringlichts RL durch den Durchgang bis zu einem Erfassungsbereich des Hallsensors HSR durch. Dargestellt ist zudem ein Y-Schlitten KTY des Kreuztischs KT.

Aus der Erkennung dieser Komponenten bestimmt erfindungsgemäß eine Steuerungseinrichtung, wie groß die maximale Höhenverstellung der Blende BH ist. Damit wird eine Kollision mit der Unterseite der entsprechenden Komponente vermieden.

Weiterhin kann erfindungsgemäß ein Sicherungsmechanismus vorgesehen sein, der gewährleistet, dass sich die Blendenkante BH motorisch nicht bewegen lässt, wenn beispielsweise der Tisch KT abgenommen wurde und die Blende oberhalb der Oberfläche des Gehäuses G liegt. Alternativ kann in dieser Situation die Blendenkante auch unter die Z-Koordinate der Oberfläche des Gehäuses G gefahren werden. Damit soll vermieden werden, dass sich der Benutzer durch motorische Bewegung der Blende BH verletzen kann, wenn der Tisch KT nicht auf dem Gehäuse G aufgesetzt ist.

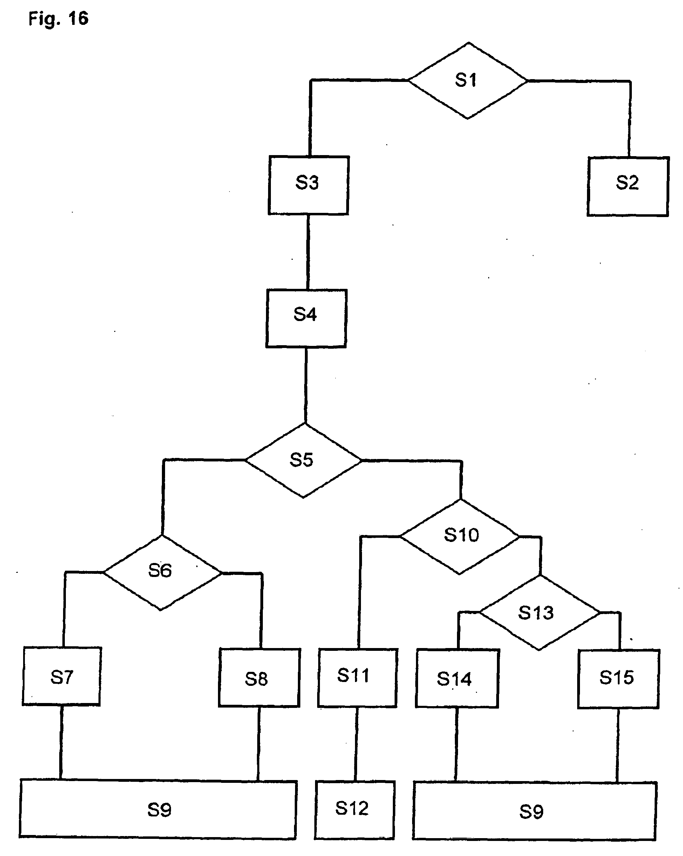

Das Einstellen der Blendenkante abhängig von den mit den Hallsensoren erkannten Aufsätzen wird mit Bezug auf Figur 16 beschrieben.

In Figur 16 sind schematisch die Verfahrensschritte S1 bis S15 eines erfindungsgemäßen Verfahrens zum Einstellen einer bestgeeigneten Beleuchtung für ein Lichtmikroskop dargestellt. Das erfindungsgemäße Verfahren kann insbesondere mit einer erfindungsgemäßen Vorrichtung zur Durchlichtbeleuchtung für ein Lichtmikroskop durchgeführt werden. Die Beleuchtung wird dabei durch Bewegen der Blendenkanten einer erfindungsgemäßen Vorrichtung an eine geeignete Position eingestellt.

Das erfindungsgemäße Verfahren wird anhand eines Ausführungsbeispiels mit vier Blenden, welche jeweils eine lineare Blendenkante aufweisen, erläutert. Diese vier Blenden werden als vordere, hintere und zwei seitliche Blenden bezeichnet. Erfindungsgemäß kann aber auch eine andere Anzahl an Blenden verwendet werden. Insbesondere kann auch eine Irisblende eingesetzt werden. Die im Folgenden beschriebenen Verfahrensschritte sind dann entsprechend anzupassen.

In Schritt S1 wird überprüft, ob eine Mikroskopeinstellung, nämlich eine Objektiv-Zoomkörper-Kombination, die momentan in dem Lichtmikroskop verwendet wird, und eine damit eingestellte Zoom-Vergrößerung, abrufbar ist. Dies kann beispielsweise über einen CAN-Bus erfolgen. Bei der Antwort "ja" folgt der Schritt S3, andernfalls der Schritt S2.

Bei Schritt S2 werden alle verfügbaren Blenden geöffnet, das heißt keine der verfügbaren Blendenkanten beschneidet das Beleuchtungsstrahlenbündel. Hierzu wird die hintere Blende geöffnet, indem beide zugehörigen Schlitten, die dem Bewegen der Blende dienen, in die Referenzposition der hinteren Blende gefahren werden. Die Referenzposition der hinteren Blende kann diejenige anfahrbare Position sein, welche den größten Y-Wert aufweist. Die vordere Blende wird in analoger Weise durch Bewegen ihrer beiden Schlitten in ihre Referenzposition gefahren. An dieser befindet sie sich an derjenigen anfahrbaren Position, welche den kleinsten Y-Wert aufweist. Zudem werden die beiden seitlichen Blenden geöffnet, indem ihre jeweiligen Referenzpositionen angefahren werden. Für die erste seitliche Blende ist dies die Position mit minimal einstellbarem X-Wert. Für die zweite seitliche Blende ist dies die Position mit maximal einstellbarem X-Wert.

In Schritt S3 wird mit der abgefragten Objektiv-Zoomkörper-Kombination und der eingestellten Zoom-Vergrößerung eine ideale Z-Position für eine Blendenkante bestimmt. Dies kann beispielsweise mit Hilfe von einer abgespeicherten Wertetabelle erfolgen, in welcher ideale Z-Positionen für verschiedene Objektiv-Zoomkörper-Kombinationen und verschiedene Zoom-Vergrößerungen hinterlegt sind. Die Wertetabelle kann durch vorhergehende Messungen bestimmt worden sein oder durch theoretische Berechnungen. Für Zoom-Vergrößerungen, zu denen in der Wertetabelle kein Wert hinterlegt ist, kann eine ideale Z-Position durch Interpolation der Werte aus der Wertetabelle ermittelt werden. Die ideale Z-Position der Blendenkante kann dadurch definiert sein, dass der Beleuchtungsstrahlengang des Lichtmikroskops an dieser Z-Position eine Taille aufweist. Auf diesen Schritt folgt der Schritt S4.

Im Schritt S4 wird der verfügbare Bauraum ermittelt. Dieser stellt einen freien Bewegungsraum dar, in dem die Z-Position der Blendenkanten bewegt werden können. Eine maximale Z-Position des verfügbaren Bauraums kann durch verwendete Zusatzeinrichtungen definiert sein. Die minimale Z-Position des verfügbaren Bauraums kann eine Position unmittelbar neben der Lichtquelle sein. Die folgenden Ausführungen beziehen sich auf die Variante der erfindungsgemäßen Vorrichtung, bei welcher als Zusatzeinrichtungen ein Probenauflagetisch KT, eine Adapterplatte AP und ein Ringlicht RL verwendet werden können. Die Ermittlung des verfügbaren Bauraums erfolgt mit Sensoren, beispielsweise Hallsensoren, zur Erkennung der genannten Zusatzeinrichtungen.

Stellen die Sensoren in Schritt S4 fest, dass keine Zusatzeinrichtung verwendet wird, so wird die maximale Z-Position Zmax auf eine Z-Position ZDmax unmittelbar unter der Halteeinrichtung TOA für die zu untersuchende Probe festgelegt.

Erkennen die Sensoren in Schritt S4, dass eine Adapterplatte AP eingesetzt ist, so wird der verfügbare Bauraum bis zu einer Z-Position beschränkt, welche unmittelbar unter der Adapterplatte AP liegt. Diese Z-Position kann als ZDAmax bezeichnet werden, wenn kein Probenauflagetisch verwendet wird, und als ZDATmax, wenn ein Probenauflagetisch verwendet wird. Ob ein Ringlicht RL vorhanden ist, ist in diesen Fällen für die Bestimmung des verfügbaren Bauraums nicht relevant, da sich die Aufnahmeposition für ein Ringlicht RL oberhalb der Adapterplatte AP befindet.

Für den Fall, dass im Schritt S4 ein Probenauflagetisch KT erkannt wird, aber weder eine Adapterplatte AP noch ein Ringlicht RL vorhanden sind, so wird die maximale Z-Position Zmax auf eine Z-Position ZDmax festgelegt, welche sich unmittelbar unter der Halteeinrichtung TOA des Probenauflagetischs KT befindet.

Wird hingegen in Schritt S4 durch die Sensoren festgestellt, dass außer dem Probenauflagetisch KT auch ein Ringlicht RL, aber keine Adapterplatte AP vorhanden ist, so wird die maximale Z-Position Zmax auf eine Z-Position ZTRmax festgelegt, welche sich unmittelbar unter dem Ringlicht RL befindet.

Hiermit ist Schritt S4 abgeschlossen und es folgt Schritt S5. In diesem wird überprüft, ob die ideale Z-Position der Blendenkante, welche in Schritt S3 bestimmt worden ist, innerhalb des in Schritt S4 bestimmten verfügbaren Bauraums liegt. Trifft dies zu, so folgt Schritt S6, anderenfalls Schritt S10.

In Schritt S6 wird festgestellt, welche der verfügbaren Blendenkanten an die ideale Z-Position bewegbar ist. Je nach Ausführungsform der erfindungsgemäßen Vorrichtung kann nicht eine einzige Blende über den gesamten verfügbaren Bauraum bewegt werden. Stattdessen ist die vordere Blende in einen Bereich kleinerer Z-Werte bis maximal Zmin + HBVmax beweglich, während die hintere Blende in einem Bereich größerer Z-Werte als Zmin + HBVmax bewegt werden kann. Dabei bezeichnet HBVmax den maximalen Höhenabstand, den die vordere Blende von der Leuchtfläche einnehmen kann. Wird in Schritt S6 festgestellt, dass die ideale Z-Position der Blendenkante im Bewegungsraum der vorderen Blende liegt, so folgt Schritt S7. Liegt hingegen die ideale Z-Position im Bewegungsraum der hinteren Blende, folgt Schritt S8. Praktisch können sich die Bewegungsräume der vorderen und hinteren Blende überlappen. Dennoch wird in Schritt S6 eine Blende nach den oben genannten Kriterien ausgewählt.

In Schritt S7 wird die vordere Blende zu der idealen Z-Position bewegt und die hintere Blende wird geöffnet.

In Schritt S8 wird hingegen die hintere Blende an die ideale Z-Position bewegt und die vordere Blende wird geöffnet. Das Öffnen kann dabei wie zu Schritt S2 beschrieben erfolgen.

Für Ausgestaltungen der erfindungsgemäßen Vorrichtung, bei denen genau eine höhenverstellbare Blendenkante vorhanden ist, können die Schritte S6 bis S8 durch den Schritt ersetzt werden, dass diese höhenverstellbare Blendenkante an die ideale Z-Position bewegt wird.

Sowohl auf Schritt S7 als auch auf Schritt S8 folgt Schritt S9, in welchem die beiden seitlichen Blenden positioniert werden. Deren Position wird, analog zu Schritt S3, abhängig von der verwendeten Objektiv-Zoomkörper-Kombination und der damit eingestellten Zoom-Vergrößerung bestimmt. Die beiden seitlichen Blenden werden sodann an die geeigneten Positionen bewegt. Hiermit ist die Einstellung aller vorhandenen Blenden und damit auch das erfindungsgemäße Verfahren abgeschlossen.

Im Folgenden wird Schritt S10 beschrieben, welcher durchgeführt wird, wenn in Schritt S5 festgestellt wird, dass die ideale Z-Position der Blendenkante außerhalb des verfügbaren Bauraums liegt. In Schritt S10 wird ermittelt, ob die Verwendung eines Prismenfilms sinnvoll ist. Wird ein Prismenfilm in einem bestimmten Winkel in das Beleuchtungsstrahlenbündel eingeführt, so wird die Ausbreitung des Beleuchtungsstrahlenbündels in vorbekannter Weise beeinflusst. Wird in Schritt S10 festgestellt, dass sich durch Verwendung eines Prismenfilms die Beleuchtung für das Lichtmikroskop verbessern lässt, so folgt Schritt S11, anderenfalls Schritt S13.

In Schritt S11 wird zunächst der Prismenfilm in den Strahlengang eingebracht. Zudem wird die hintere Blende auf eine YZ-Position eingestellt, welche abhängig von der verwendeten Objektiv-Zoomkörper-Kombination und der eingestellten Zoom-Vergrößerung ermittelt wird. Die vordere Blende kann auf eine Y-Position bewegt werden, welche ebenfalls abhängig von der verwendeten Objektiv-Zoomkörper-Kombination und der eingestellten Zoom-Vergrößerung bestimmt wird. Die Z-Position der vorderen Blende kann auf eine Position Zmin dicht oberhalb der Lichtquelle eingestellt werden.

Auf Schritt S11 folgt Schritt S12, in welchem die seitlichen Blenden auf X-Positionen bewegt werden, welche abhängig von der verwendeten Objektiv-Zoomkörper-Kombination und der eingestellten Zoom-Vergrößerung bestimmt werden, wobei berücksichtigt wird, dass sich der Prismenfilm im Strahlengang befindet.

Wird in Schritt S10 festgestellt, dass mit Prismenfilm keine verbesserte Beleuchtung erreichbar ist, so folgt Schritt S13, in welchem kein Prismenfilm verwendet wird. Stattdessen wird überprüft, welche der verfügbaren Blenden am nahesten zu der idealen Z-Position bewegt werden kann. Wird festgestellt, dass die ideale Z-Position unterhalb des verfügbaren Bauraums liegt, so folgt Schritt S14. Ist hingegen die ideale Z-Position zu hoch, folgt Schritt S15.

In Schritt S14 wird die vordere Blende an dem kleinstmöglichen Z-Wert positioniert. Zudem kann vorgesehen sein, dass die Y-Position der vorderen Blende abhängig von der verwendeten Objektiv-Zoomkörper-Kombination und der eingestellten Zoom-Vergrößerung so eingestellt wird, dass kein Beschneiden des Strahlengangs erfolgt. Die hintere Blende wird in diesem Fall geöffnet, was wie zu Schritt S2 beschrieben erfolgen kann. Hierauf folgt der bereits beschriebene Schritt S9 zur Einstellung der beiden seitlichen Blenden.

Wird hingegen im Schritt S13 festgestellt, dass die ideale Z-Position zu hoch für den verfügbaren Bauraum ist, so wird in Schritt S15 die hintere Blende auf die höchstmögliche Z-Position für eine beschnittfreie Einstellung analog zur Vorgehensweise in Schritt S14 eingestellt. Die vordere Blende wird in diesem Fall geöffnet. Hierauf folgt ebenfalls Schritt S9 zur Einstellung der seitlichen Blenden.

Damit sind alle verfügbaren Blenden bestmöglich eingestellt und das erfindungsgemäße Verfahren ist abgeschlossen.

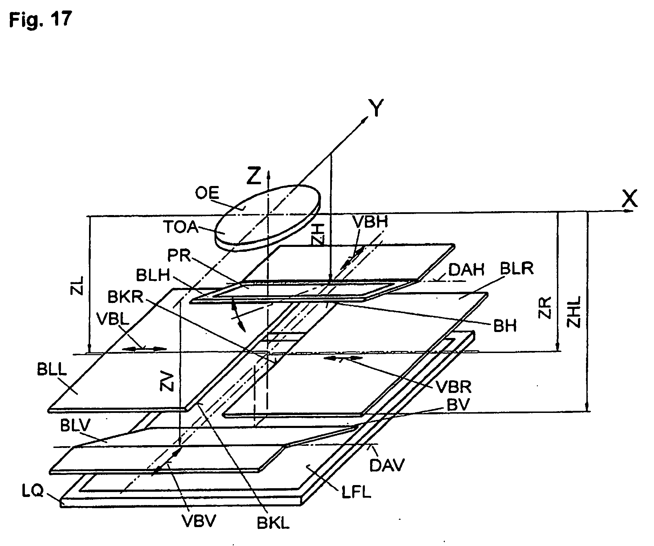

Eine erfindungsgemäße Vorrichtung mit vier Blenden, welche zur Durchführung des beschriebenen Verfahrens zum Einstellen einer bestgeeigneten Beleuchtung geeignet ist, wird im Folgenden mit Bezug auf Figur 17 beschrieben.

Figur 17 zeigt eine schematische Perspektivdarstellung von vier Blenden BLL, BLR, BLV und BLH einer erfindungsgemäßen Vorrichtung. Unterhalb der Blenden ist eine Lichtquelle LQ mit einer Leuchtfläche LFL vorhanden. Oberhalb der Blenden befindet sich die transparente Objektauflage TOA, welche die Objektebene OE darstellt.

Die Blenden BLL, BLR, BLV und BLH weisen je eine lineare Blendenkante BKL, BKR, BV und BH auf und bilden so einen rechteckigen Freiraum. Um Größe und Position des Freiraums einstellen zu können, sind die Blenden in der XY-Ebene verschiebbar. Erfindungsgemäß sind die Blenden nicht nur in der XY-Ebene zur Reduzierung des Streulichts einstellbar, sondern auch in der Z-Richtung verstellbar. Bedeutsam sind in Figur 17 außerdem folgende Bezugsziffern: VBH: Verschieberichtung der hinteren Blende; VBL: Verschieberichtung der linken Blende; VBR: Verschieberichtung der rechten Blende sowie VBV, welches eine Verschieberichtung der vorderen Blende bezeichnet. ZH bezeichnet in Figur 17 die Z-Koordinate der hinteren Drehachse DAH. Mit ZL beziehungsweise ZR sind in Figur 17 die Z-Koordinaten der der linken beziehungsweise der rechten Blendenkante gekennzeichnet. ZV schließlich bezeichnet die Z-Koordinate der vorderen Drehachse DAV.

Erfindungsgemäß kann vorgesehen sein, dass abhängig von der verwendeten Objektiv-Zoomkörper-Kombination automatisch eine vordefinierte Blendenform eingestellt wird. Die vordefinierten Blendenformen sind dabei durch die jeweiligen Positionen der verfügbaren Blenden festgelegt.

Erfindungsgemäß kann ein Kontrastmodus "Azimut" auswählbar sein. In diesem ist die Form des Freiraums zwischen den Blenden fest, aber die XY-Position des Freiraums kann verändert werden. Hiermit sind verschiedene Kontraste bei der Beobachtung möglich.

Die Blenden müssen erfindungsgemäß nicht in derselben Z-Ebene liegen. Im dargestellten Beispiel sind die vier Blenden in Z-Richtung zueinander versetzt und ihre Bewegungsräume überlappen einander in Z-Richtung. Die Blendenkante BV der untersten Blende BLV und die Blendenkante BH der obersten Blende BLH sind zudem höhenverstellbar, das heißt in Z-Richtung beweglich. Hierzu können diese jeweils um eine Drehachse DAV, DAH gedreht werden. Für die rechte und linke Blende ist keine Höhenverstellung vorgesehen.

Die kostengünstigste Idealform ist eine lineare Blendenkante BK, da sie sich ohne größeren Aufwand leicht herstellen lässt. Leicht gekrümmte Blendenkanten BK lassen sich prinzipiell auch einsetzen, allerdings verändern sich dann mit der Kippung der Blende BL bei feststehender XYZ-Koordinate eines einzelnen Punktes auf der Blendenkante BK mit zunehmender Entfernung von diesem Punkt entlang der Blendenkante BK auch die Y- und die Z-Werte, was praktisch schlecht beherrschbar ist. Krümmungen der Blendenkante BK, die im Bereich der üblichen Fertigungstoleranzen liegen und/oder die noch nicht zu sichtbaren Inhomogenitäten führen, spielen hierbei keine Rolle.

Zum Positionieren der höhenverstellbaren Blendenkanten BV und BH sind diese bevorzugt mit zwei Schlitten verbunden, die mit Schrittmotoren angetrieben werden. Für die beiden seitlichen Blendenkanten BKL und BKR ist ein Schrittmotor zum Bewegen in die X-Richtung ausreichend. Die Schlitten der höhenverstellbaren Blendenkanten BV und BH können wie in Zusammenhang mit Figur 11 beschrieben gebildet sein.

Um aus der Einstellung der Schlitten die YZ-Koordinate der Blendenkanten BV und BH berechnen zu können, müssen zusätzlich die absoluten Schlittenpositionen bekannt sein. Vorzugsweise werden als Antrieb kostengünstige Schrittmotoren, die über eine Ritzel-Zahnstangen-Verzahnung eine Linearbewegung ermöglichen, eingesetzt. Allerdings muss die Absolutposition eines Linearantriebs mit einfachen Schrittmotoren in einer bekannten Position gesetzt werden. Das erfolgt vorzugsweise beim Einschalten durch einen festgelegten Initialisierungsablauf.

Würden bei der Initialisierung der Schrittmotoren beide in Figur 11 dargestellten Schlitten synchron in die Endlagenposition fahren bis Schaltfahnen der Schlitten entsprechende Positionssensoren für die Endlagenposition erreichen, bliebe die Z-Koordinate der Blendenkante konstant. Wenn die Blende in den Tischbauraum ausgefahren ist, etwa weil die Durchlichtvorrichtung mit der Blende in dieser Position ausgeschaltet worden ist, so würde eine solche Initialisierung zu einer Kollision mit dem Gehäuse führen.

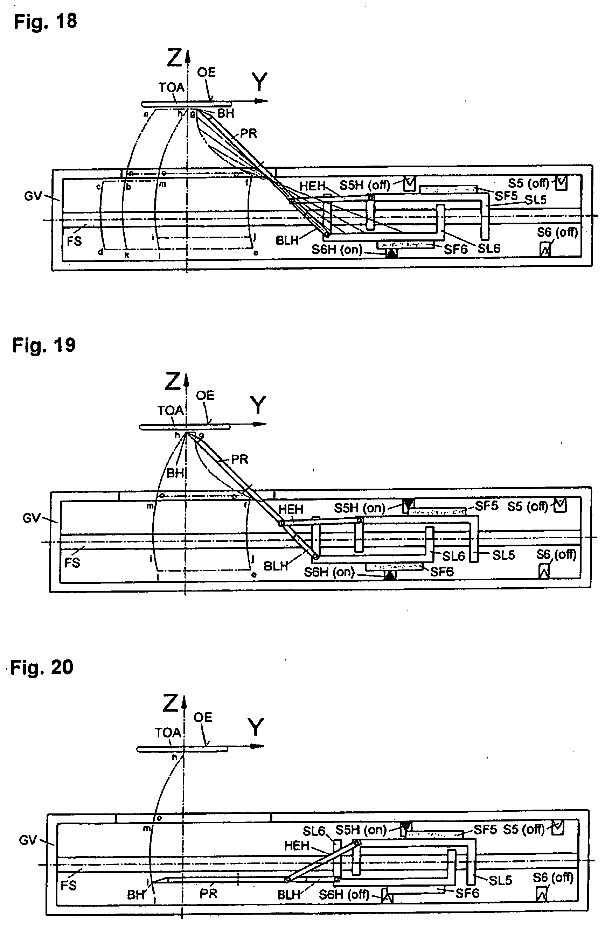

Um dies zu vermeiden, wird die im Folgenden beschriebene erfindungsgemäße Initialisierung durchgeführt, deren Ablauf schematisch in den Figuren 18 bis 22 gezeigt ist. Hier wird die Blende BLH durch zwei Schlitten SL5 und SL6 aus einer unbekannten Position in eine unterste Position gefahren. Indem der Schlitten SL5 über einen hinteren Hebel HEH mit der Blende BLH verbunden ist, kann die Blende BLH gedreht werden. Die Objektebene OE an der transparenten Objektauflage TOA ist hier oberhalb des Gehäuses G durch einen nicht dargestellten Probenauflagetisch gegeben.

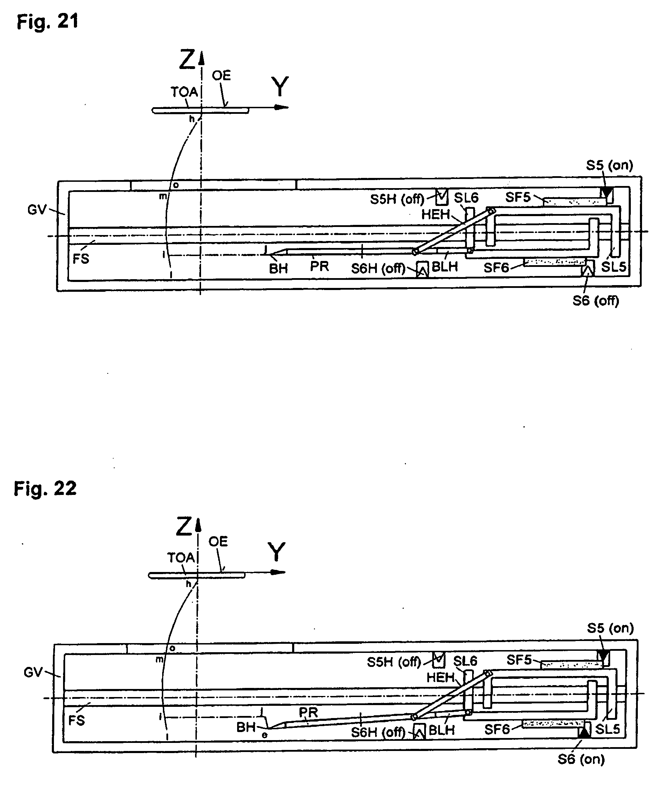

Die Schlitten SL5 und SL6 besitzen Schaltfahnen SF5 und SF6, die mit Positions-und Positionshilfssensoren S5, S6 sowie S5H und S6H zusammenwirken. Ist S5H off, das heißt die Schaltfahne SF5 nicht im Bereich dieses Sensors, so befindet sich nach der erfindungsgemäßen Anordnung die Blendenkante BH innerhalb der Fläche h-o-m-i-l-e-j-f-p-g-h, siehe Figur 18. Nun werden beide Schlitten SL5 und SL6 synchron nach vorne gefahren, bis der Sensor SH5 auf On schaltet. Jetzt befindet sich die Blendenkante auf der Kurve h-o-m-i-l, siehe Figur 19. Darauf wird der untere Schlitten SL6 gefahren bis SH6 gerade auf Off schaltet. Die Blendenkante befindet sich jetzt im Punkt i, siehe Figur 20. Nun können beide Schlitten synchron zurückgefahren werden, bis der Sensor S5 auf On schaltet, siehe Figur 21. Die Blendenvorrichtung ist damit im Ausgangszustand angekommen, ohne dass die Blende BLH gegen einen Teil des Gehäuses stößt. Fährt nun der Schlitten SL6 weiter, bis auch Sensor S6 auf On schaltet, ist die Blende in der untersten Ebene angekommen, siehe Figur 22.

Durch die erfindungsgemäße Anordnung der Sensoren S5, S6, SH5 und SH6 sowie durch die Dimensionierung der Schaltfahnen SF5 und SF6 wird ein störungsfreier Betrieb der Blendenanordnung in einfacher Weise gewährleistet.

Nach diesem Initialisierungsvorgang ist die Absolutposition der Schlitten bekannt. Über die Hebelgeometrie lassen sich auch die entsprechenden YZ-Koordinaten der Blendenkante BH ermitteln, sofern die Lage der Blendenkante BH relativ zur Schaltposition bekannt ist. Dies lässt sich über feststehende Maße nur sehr ungenau ermitteln, deshalb wird ein geeigneter Justierprozess über eine elektronische Offsetkorrektur vorgesehen. Hierzu wird die Blendenkante in eine bekannte optisch sichtbare Lage gebracht, mit der Offsetkorrektur werden die Abweichungen zur realen beziehungsweise toleranzbehafteten Schaltpunktlage der Schaltfahnen SF5 und SF6 ausgeglichen.

Vorteilhafterweise kann der Nutzungsbereich bei der erfindungsgemäßen Vorrichtung durch einen Probeauflagetisch erweitert werden, ohne dass teure absolut messende Systeme zur Positionsdetektion und zur Positionseinstellung der Blenden erforderlich sind.

Mit Bezug auf Figur 11 kann nun durch die Bewegung der beiden Schlitten in den Richtungen VBHH beziehungsweise VBH entlang einer Führungsbahn um eine bestimmte Schrittanzahl des antreibenden Schrittmotors die zugehörige Blendenkante um einen bestimmten YZ-Wert bewegt werden. Weil die Absolutposition der Schlitten durch den Initialisierungsprozess bekannt ist, lässt sich die entsprechende YZ-Koordinate der Blendenkante BH berechnen. Die Berechnung lässt sich auch invers durchführen, das heißt aus einem vorgegebenen Verfahrweg der Blendenkante BH in der Y- und/oder der Z-Richtung lassen sich auch die hierfür erforderlichen Schlittenwege beziehungsweise die Anzahl der Schrittmotor-Schritte berechnen.

Ohne Beschränkung kann die Erfindung dadurch verallgemeinert werden, dass beispielsweise der Strahlengang in der Durchlichthaube durch Umlenkoptiken wie Spiegel gefaltet ist und Linsen als Relay-Optiken verwendet werden.

Mit der vorliegenden Erfindung werden ein kostengünstiges Durchlicht-Beleuchtungsverfahren sowie eine Vorrichtung zur Durchlichtbeleuchtung bereitgestellt, die besonders zur Ausleuchtung von kontrastarmen Durchlichtobjekten in den kleineren Übersichtsvergrößerungen im Hellfeld an Stereomikroskopen und Makroskopen geeignet sind.

Das Verfahren liefert in einem sehr großen Sehfeldbereich eine homogene Ausleuchtung. Hierfür kann die Blendenkante innerhalb eines maximal verfügbaren Bauraums positioniert werden. Dieser wird erfindungsgemäß mit Mitteln zum Feststellen von Anwesenheit und Identität von zusätzlichen Aufsätzen bestimmt. Durch einen optional montierbaren Probenauflagetisch kann der verfügbare Bauraum vorteilhafterweise erhöht werden. Ein wesentlicher Vorteil ist außerdem, dass die erfindungsgemäße Vorrichtung in einer üblichen Bauhöhe HER, siehe Fig. 1, von Durchlichteinrichtungen ohne sichtbare Störungen einsetzbar ist.

Sodann sind günstige oder optimale Beleuchtungseinstellungen auch für ungeübte Benutzer leicht einstell- und reproduzierbar.

Schließlich eignet sich das Verfahren insbesondere für kostengünstige Objektiv-Zoomkörper-Kombinationen, die keine auskorrigierten und über den Zoombereich feststehenden Pupillenebenen besitzen und nicht zwingend für polarisationsoptische Verfahren nutzbar sein müssen.

Bezugszeichenliste

| a | Spezielle YZ-Position der hinteren Blendenkante |
| AP | Adapterplatte mit eingeklebtem Magnet MA |
| $\alpha$ | Einstellwinkel des Umlenkspiegels SP |
| ASPH | Asphärische Beleuchtungsoptik |
| $\beta$ | aktuell wirksamer Zoomfaktor des Zoomkörpers |
| $\beta 1$ | Stützstelle Nr. 1 zwischen $\beta$min und $\beta$max zur Beschreibung der Zoomfaktor-Kurven über Näherungsfunktionen |
| $\beta 2$ | Stützstelle Nr. 2 zwischen $\beta$min und $\beta$max zur Beschreibung der Zoomfaktor-Kurven über Näherungsfunktionen |
| $\beta 3$ | Stützstelle Nr. 3 zwischen $\beta$min und $\beta$max zur Beschreibung der Zoomfaktor-Kurven über Näherungsfunktionen |
| $\beta 4$ | Stützstelle Nr. 4 zwischen $\beta$min und $\beta$max zur Beschreibung der Zoomfaktor-Kurven über Näherungsfunktionen |
| $\beta 5$ | Stützstelle Nr. 5 zwischen $\beta$min und $\beta$max zur Beschreibung der Zoomfaktor-Kurven über Näherungsfunktionen |
| $\beta 6$ | Stützstelle Nr. 6 zwischen $\beta$min und $\beta$max zur Beschreibung der Zoomfaktor-Kurven über Näherungsfunktionen |
| $\beta 7$ | Stützstelle Nr. 7 zwischen $\beta$min und $\beta$max zur Beschreibung der Zoomfaktor-Kurven über Näherungsfunktionen |
| $\beta 8$ | Stützstelle Nr. 8 zwischen $\beta$min und $\beta$max zur Beschreibung der Zoomfaktor-Kurven über Näherungsfunktionen |
| $\beta 9$ | Stützstelle Nr. 9 zwischen $\beta$min und $\beta$max zur Beschreibung der Zoomfaktor-Kurven über Näherungsfunktionen |
| $\beta 10$ | Stützstelle Nr. 10 zwischen $\beta$min und $\beta$max zur Beschreibung der Zoomfaktor-Kurven über Näherungsfunktionen |
| $\beta 11$ | Stützstelle Nr. 11 zwischen $\beta$min und $\beta$max zur Beschreibung der Zoomfaktor-Kurven über Näherungsfunktionen |
| $\beta 12$ | Stützstelle Nr. 12 zwischen $\beta$min und $\beta$max zur Beschreibung der Zoomfaktor-Kurven über Näherungsfunktionen |
| $\beta 13$ | Stützstelle Nr. 13 zwischen $\beta$min und $\beta$max zur Beschreibung der Zoomfaktor-Kurven |

| | |
|---|---|
| | über Näherungsfunktionen |
| b | Spezielle YZ-Position der hinteren Blendenkante |
| BE | Bedieneinheit für das Gesamtsystem |
| BH | Blendenkante hinten |
| BK | Blendenkante |
| BKL | Blendenkante links |
| BKR | Blendenkante rechts |
| BL | Blende |
| BLH | Hintere Blende |
| BLL | Linke Blende |
| BLR | Rechte Blende |
| BLV | Vordere Blende |
| BMAB | Bedienelement für motorisierte Aperturblende MAB |
| BMFT | Bedieneinheit für die motorisierte Fokussiereinrichtung |
| BMZK | Bedieneinheit für den motorisierten Zoomkörper |
| BV | Blendenkante vorne |
| BZR | Hilfsstift zur Befestigung des Magneten MR an der Ringleuchte RL |
| BZT | Hilfsstift zur Befestigung des Magneten MT am Tisch KT |
| c | Spezielle YZ-Position der hinteren Blendenkante |
| COW | Codierter Objektivwechsler |
| d | Spezielle YZ-Position der hinteren Blendenkante |
| DA | Drehachse |
| DAH | Drehachse hintere Blende |
| DAV | Drehachse vordere Blende |
| DG | Dicke der transparenten Objektauflage TOA bzw. der Glasplatte |
| DL | Durchlichteinrichtung |
| e | Spezielle YZ-Position der hinteren Blendenkante |
| E | Ebene in Höhe der Objektauflage auf der Durchlichteinrichtung; diese Ebene wird in der Regel durch die Oberseite der Durchlichteinrichtung gebildet |
| EM | Elektronikmodul zur Steuerung des Gesamtsystems (Signalverarbeitung etc.) |
| ET | Ebene in Höhe der Objektauflage auf dem Tisch; diese Ebene wird i.d.R. durch die Oberseite des Tischs gebildet |
| f | Spezielle YZ-Position der hinteren Blendenkante |
| f2(1) | Ideale Blendenposition in Z-Richtung für das Objektiv OBJ2 am motorisierten Zoomkörper MZK an der Stützstelle Nr. 1, d.h. bei $\beta1$ |
| f2(2) | Ideale Blendenposition in Z-Richtung für das Objektiv OBJ2 am motorisierten Zoomkörper MZK an der Stützstelle Nr. 2, d.h. bei $\beta2$ |
| f2(3) | Ideale Blendenposition in Z-Richtung für das Objektiv OBJ2 am motorisierten |

| | |
|---|---|
| | Zoomkörper MZK an der Stützstelle Nr. 3, d.h. bei $\beta3$ |
| f2(4) | Ideale Blendenposition in Z-Richtung für das Objektiv OBJ2 am motorisierten Zoomkörper MZK an der Stützstelle Nr. 4, d.h. bei $\beta4$ |
| f2(5) | Ideale Blendenposition in Z-Richtung für das Objektiv OBJ2 am motorisierten Zoomkörper MZK an der Stützstelle Nr. 5, d.h. bei $\beta5$ |
| f2(6) | Ideale Blendenposition in Z-Richtung für das Objektiv OBJ2 am motorisierten Zoomkörper MZK an der Stützstelle Nr. 6, d.h. bei $\beta6$ |
| f2(7) | Ideale Blendenposition in Z-Richtung für das Objektiv OBJ2 am motorisierten Zoomkörper MZK an der Stützstelle Nr. 7, d.h. bei $\beta7$ |
| f2(8) | Ideale Blendenposition in Z-Richtung für das Objektiv OBJ2 am motorisierten Zoomkörper MZK an der Stützstelle Nr. 8, d.h. bei $\beta8$ |
| f2(9) | Ideale Blendenposition in Z-Richtung für das Objektiv OBJ2 am motorisierten Zoomkörper MZK an der Stützstelle Nr. 9, d.h. bei $\beta9$ |
| f2(10) | Ideale Blendenposition in Z-Richtung für das Objektiv OBJ2 am motorisierten Zoomkörper MZK an der Stützstelle Nr. 10, d.h. bei $\beta10$ |
| f2(11) | Ideale Blendenposition in Z-Richtung für das Objektiv OBJ2 am motorisierten Zoomkörper MZK an der Stützstelle Nr. 11, d.h. bei $\beta11$ |
| f2(12) | Ideale Blendenposition in Z-Richtung für das Objektiv OBJ2 am motorisierten Zoomkörper MZK an der Stützstelle Nr. 12, d.h. bei $\beta12$ |
| f2(13) | Ideale Blendenposition in Z-Richtung für das Objektiv OBJ2 am motorisierten Zoomkörper MZK an der Stützstelle Nr. 13, d.h. bei $\beta13$ |
| FF | Frontfläche des Lichtleiters LL |
| FS | Führungsbahn einer Linearführung, z.B. über eine Führungsstange |
| g | Spezielle YZ-Position der hinteren Blendenkante |
| G | Gehäuse |
| GV | Vereinfacht dargestelltes Gehäuse |
| h | Spezielle YZ-Position der hinteren Blendenkante |
| H1 | Hinterer Lichtstrahl 1 |
| H1' | Hinterer Lichtstrahl 1 mit Strahlversatz durch transparente Objektauflage TOA bzw. Glasplatte |
| H2 | Hinterer Lichtstrahl 2 |
| H2' | Hinterer Lichtstrahl 2 mit Strahlversatz durch transparente Objektauflage TOA |

| | |
|---|---|
| | bzw. Glasplatte |
| HB1 | Höhenabstand von der Leuchtfläche LFL zur Blende BL in der idealen Z-Blendenlage für Das Objektiv OBJ1 am Zoomkörper MZK mit dem aktuellen Zoomfaktor β |
| HEH | Hebel hinten |
| HER | Ergonomisch vertretbare Bauhöhe der Durchlichteinrichtung DL |
| HM | Hinterer Mittenlichtstrahl |
| HM' | Hinterer Mittenlichtstrahl mit Strahlversatz durch transparente Objektauflage TOA bzw. Glasplatte |
| HSA | Hall-Sensor zur Adapterplattenerkennung |
| HSR | Hall-Sensor zur Ringleuchtenerkennung |
| HST | Hall-Sensor zur Tischerkennung |
| HT | Z-Verschiebung der Objektebene durch den Tisch KT; entspricht in der Regel der Tischhöhe |
| hVB | Verschieberichtung zur Anpassung der Blendenkante an die ideale Z-Blendenlage |
| i | Spezielle YZ-Position der hinteren Blendenkante |
| j | Spezielle YZ-Position der hinteren Blendenkante |
| k | Spezielle YZ-Position der hinteren Blendenkante |
| K | Kamera zur Dokumentation |
| Kh1 | Kurve, die die ideale Blendenlage für OBJ1 an MZK abhängig von β darstellt |
| Kh2o | oberer Kurvenabschnitt, der die ideale Blendenlage für OBJ2 an MZK abhängig von β darstellt (zwischen βmin und βP2) |
| Kh2omin | Kleinster Wert des oberen Kurvenabschnitts Kh2o |
| Kh2u | unterer Kurvenabschnitt, der die ideale Blendenlage für OBJ2 an MZK abhängig von b darstellt (zwischen βP2 und βmax) |
| Kh2umax | Größter Wert des unteren Kurvenabschnitts Kh2u |
| Kh3 | Kurve, die die ideale Blendenlage für OBJ3 an MZK abhängig von β darstellt |
| KLD | Kaltlichtquelle zur Lichtversorgung der Durchlichteinrichtung DL |
| KT | Kreuztisch, motorisch |
| KTF | Feste Grundplatte von Kreuztisch KT |
| KTY | Y-Schlitten von Kreuztisch KT |
| I | Spezielle YZ-Position der hinteren Blendenkante |
| L | Linker Abbildungskanal |
| L1 | Linker Lichtstrahl 1 |
| L1' | Linker Lichtstrahl 1 mit Strahlversatz durch transparente Objektauflage TOA bzw. Glasplatte |
| L2 | Linker Lichtstrahl 2 |
| L2' | Linker Lichtstrahl 2 mit Strahlversatz durch transparente Objektauflage TOA bzw. Glasplatte |
| L3 | Linker Lichtstrahl 3 |

| | |
|---|---|
| L3' | Linker Lichtstrahl 3 mit Strahlversatz durch transparente Objektauflage TOA bzw. Glasplatte |
| L4 | Linker Lichtstrahl 4 |
| L4' | Linker Lichtstrahl 4 mit Strahlversatz durch transparente Objektauflage TOA bzw. Glasplatte |
| L5 | Linker Lichtstrahl 5 |
| L5' | Linker Lichtstrahl 5 mit Strahlversatz durch transparente Objektauflage TOA bzw. Glasplatte |
| L6 | Linker Lichtstrahl 6 |
| L6' | Linker Lichtstrahl 6 mit Strahlversatz durch transparente Objektauflage TOA bzw. Glasplatte |
| LFL | Leuchtfläche der Lichtquelle LQ |
| LFLX | Ausdehnung der Leuchtfläche LFL in X-Richtung |
| LFLY | Ausdehnung der Leuchtfläche LFL in Y-Richtung |
| LL | Lichtleiter |
| LM | Linker Mittenlichtstrahl |
| LM' | Linker Mittenlichtstrahl mit Strahlversatz durch transparente Objektauflage TOA bzw. Glasplatte |
| LQ | Lichtquelle |
| LX | Leuchtflächenausdehnung in der X-Richtung für Berücksichtigung der Objektivrandstrahlen |
| LY | Leuchtflächenausdehnung in der Y-Richtung für Berücksichtigung der Objektivrandstrahlen |
| m | Spezielle YZ-Position der hinteren Blendenkante |
| M1 | Mittlerer Lichtstrahl 1 |
| M1' | Mittlerer Lichtstrahl 1 mit Strahlversatz durch transparente Objektauflage TOA bzw. Glasplatte |
| M2 | Mittlerer Lichtstrahl 2 |
| M2' | Mittlerer Lichtstrahl 2 mit Strahlversatz durch transparente Objektauflage TOA bzw. Glasplatte |
| MA | Magnet in Adapterplatte AP zur Adapterplattenerkennung |
| MFT | Motorisierte Fokussiereinrichtung |
| MR | Magnet zur Ringleuchtenerkennung |
| MT | Magnet zur Tischerkennung |
| MZK | Motorisierter Zoomkörper |
| n | Spezielle YZ-Position der hinteren Blendenkante |
| nG | Brechzahl der transparenten Objektauflage TOA |
| nO | Brechzahl des Objektes OB |
| NA1 | Numerische Apertur von Objektiv Nr. 1 |
| o | Spezielle YZ-Position der hinteren Blendenkante |
| OA | Optische Achse des Objektivs |
| OB | Objekt |

| | |
|---|---|
| OBJ1 | Objektiv Nr. 1 |
| OBJ2 | Objektiv Nr. 2 mit weit von OE entfernter Eintrittspupille |
| OBJ3 | Objektiv Nr. 3 |
| OE | Objektebene (ohne Objekt identisch mit der Objektauflage) |
| OF | Objektfeld oder Objektfelddurchmesser |
| OH | Höhe des Objektes OB inklusive des Umgebungsmediums (z.B. Petrischale mit Nährlösung) von der Objektauflage, bzw. von der Oberseite der transparenten Objektauflage TOA, bis zur Objektebene OE |
| OK | Okular |
| Ö | CSffnungsabstand zwischen dem Strahlquerschnitt-Radius in der idealen Z-Blendenlage Zh1 und der optischen Achse OA |
| p | Spezielle YZ-Position der hinteren Blendenkante |
| PR | Prismenfilm |
| R | Rechter Abbildungskanal |
| R1 | Rechter Lichtstrahl 1 |
| R1' | Rechter Lichtstrahl 1 mit Strahlversatz durch transparente Objektauflage TOA bzw. Glasplatte |
| R2 | Rechter Lichtstrahl 2 |
| R2' | Rechter Lichtstrahl 2 mit Strahlversatz durch transparente Objektauflage TOA bzw. Glasplatte |
| R3 | Rechter Lichtstrahl 3 |
| R3' | Rechter Lichtstrahl 3 mit Strahlversatz durch transparente Objektauflage TOA bzw. Glasplatte |
| R4 | Rechter Lichtstrahl 4 |
| R4' | Rechter Lichtstrahl 4 mit Strahlversatz durch transparente Objektauflage TOA bzw. Glasplatte |
| R5 | Rechter Lichtstrahl 5 |
| R5' | Rechter Lichtstrahl 5 mit Strahlversatz durch transparente Objektauflage TOA bzw. Glasplatte |
| R6 | Rechter Lichtstrahl 6 |
| R6' | Rechter Lichtstrahl 6 mit Strahlversatz durch transparente Objektauflage TOA bzw. Glasplatte |
| RL | Ringleuchte, die im Tisch optional montierbar ist |
| RM | Rechter Mittenlichtstrahl |
| RM' | Rechter Mittenlichtstrahl mit Strahlversatz durch transparente Objektauflage TOA bzw. Glasplatte |
| S5 | Positions-Sensor für den Schlitten SL5 |
| S5H | Positions-Hilfssensor für den Schlitten SL5 |
| S6 | Positions-Sensor für den Schlitten SL6 |
| S6H | Positions-Hilfssensor für den Schlitten SL6 |
| SF5 | Schaltfahne 5 zur Aktivierung von Positions-Sensor S5 und ggf. Positions-Hilfssensor S5H |
| SF6 | Schaltfahne 6 zur Aktivierung von Positions-Sensor S6 und ggf. Positions-Hilfssensor S6H |
| SL5 | Schlitten 5 |
| SL6 | Schlitten 6 |
| SP | Umlenkspiegel |
| SR1 | Bedienelement 1 in der Durchlichteinrichtung DL |
| ST1 | Lichtstrahl 1 |
| ST2 | Lichtstrahl 2 |
| ST3 | Lichtstrahl 3 |
| ST4 | Lichtstrahl 4 |
| ST5 | Lichtstrahl 5 |
| SU | Öffnungsabstand vom blendenseitigen Randstrahl der zurückprojizierten Abbildungsstrahlen zur optischen Achse OA, der durch die um den Verschiebeweg UOE von der Objektebene OE wegzeigend verschobenen Blende BL abgedeckt wird |
| SV | Strahlversätz |
| T | Tubus |
| TOA | Transparente Objektauflage |
| TR | Träger |
| u | Spezielle YZ-Position der vorderen Blendenkante |
| UOE | Verschiebeweg der Blende BL aus der idealen Blendenposition in Richtung von der Objektebene OE wegzeigend |
| V1 | Vorderer Lichtstrahl 1 |
| V1' | Vorderer Lichtstrahl 1 mit Strahlversatz durch transparente Objektauflage TOA bzw. Glasplatte |
| V2 | Vorderer Lichtstrahl 2 |
| V2' | Vorderer Lichtstrahl 2 mit Strahlversatz durch transparente Objektauflage TOA bzw. Glasplatte |
| VB | Verschieberichtung der Blende BL |
| VBH | Verschieberichtung der hinteren Blende |
| VBL | Verschieberichtung der linken Blende |
| VBR | Verschieberichtung der rechten Blende |
| VBV | Verschieberichtung der vorderen Blende |
| VM | Vorderer Mittenlichtstrahl |
| VM' | Vorderer Mittenlichtstrahl mit Strahlversatz durch transparente Objektauflage TOA bzw. Glasplatte |
| VR | Verschieberichtung |
| X | X-Koordinatenachse des XYZ-Koordinatensystems |
| Y | Y-Koordinatenachse des XYZ-Koordinatensystems |
| Z | Z-Koordinatenachse des XYZ-Koordinatensystems |
| ZDAmax | größtmögliche Z-Koordinate der Blendenkante mit Adapter ohne Tisch |
| ZDATmax | größtmögliche Z-Koordinate der Blendenkante mit Adapter und Tisch |
| ZDmax | Z-Koordinate der obersten Blendenposition, die konstruktiv realisierbar ist |
| ZDmin | Z-Koordinate der untersten Blendenpositi- |

| | |
|---|---|
| | on ohne Tisch, die konstruktiv realisierbar ist |
| ZDTmax | größtmögliche Z-Koordinate der Blendenkante mit Tisch, die ohne weitere erfindungsgemäße Maßnahmen erreichbar ist |
| ZDTmin | kleinstmögliche Z-Koordinate der Blendenkante mit Tisch |
| ZEP1 | Z-Koordinate der Eintrittspupille für das Objektiv Nr. 1 in der aktuellen Zoomvergrößerung |
| ZEP2 | Z-Koordinate der Eintrittspupille für das Objektiv Nr. 2 in der aktuellen Zoomvergrößerung |
| ZEP3 | Z-Koordinate der Eintrittspupille für das Objektiv Nr. 3 in der aktuellen Zoomvergrößerung |
| Zh | Z-Koordinate der Blendenkante BK in der idealen Z-Blendenposition für das aktuelle Objektiv in der aktuellen Zoomvergrößerung |
| Zh1 | Z-Koordinate der Blendenkante BK in der idealen Z-Blendenposition für das Objektiv Nr. 1 in der aktuellen Zoomvergrößerung |
| Zh1max | maximaler Wert von Zh für das Objektiv Nr. 1 |
| Zh1min | minimaler Wert von Zh für das Objektiv Nr. 1 |
| Zh2 | Z-Koordinate der Blendenkante BK in der idealen Z-Blendenposition für das Objektiv Nr. 2 in der aktuellen Zoomvergrößerung |
| Zh2max | maximaler Wert von Zh für das Objektiv Nr. 2 |
| Zh2min | minimaler Wert von Zh für das Objektiv Nr. 2 |
| Zh3 | Z-Koordinate der Blendenkante BK in der idealen Z-Blendenposition für das Objektiv Nr. 3 in der aktuellen Zoomvergrößerung |
| Zh3max | maximaler Wert von Zh für das Objektiv Nr. 3 |
| Zh3min | minimaler Wert von Zh für das Objektiv Nr. 3 |
| ZH | Z-Koordinate der hinteren Drehachse DAH |
| ZHL | Z-Koordinate der Leuchtfläche LFL |
| ZL | Z-Koordinate der linken Blendenkante |
| Zmin | in der aktuellen Systemumgebung kleinstmöglich einstellbare Z-Koordinate |
| Zmax | in der aktuellen Systemumgebung größtmöglich einstellbare Z-Koordinate |
| ZR | Z-Koordinate der rechten Blendenkante |
| ZThmin | Kleinstmögliche Z-Koordinate der hinteren Blendenkante mit Tisch |
| ZTRmax | Größtmögliche Z-Koordinate der hinteren Blendenkante mit Tisch und Ringleuchte RL |
| ZV | Z-Koordinate der vorderen Drehachse DAV |

**Patentansprüche**

1. Vorrichtung zur Durchlichtbeleuchtung für Lichtmikroskope, insbesondere Stereomikroskope oder Makroskope, mit veränderlicher wirksamer Eintrittspupille eines Objektivs,
   mit einer Lichtquelle (LQ) zum Aussenden eines Beleuchtungslichtbündels,
   mit einem Gehäuse (G), in dem die Lichtquelle (LQ) angeordnet ist,
   mit einer Halteeinrichtung (TOA) zum Halten einer zu untersuchenden Probe (OB) und
   mit mindestens einer Blendenkante (BK, BH, BV) zum Beschneiden des Beleuchtungslichtbündels,
   wobei die Blendenkante (BK, BH, BV) sich quer zu einer optischen Achse (OA), insbesondere eines Objektivs (OBJ1, OBJ2, OBJ3), eines Lichtmikroskops erstreckt, welches in einem Betriebszustand an der Vorrichtung zur Durchlichtbeleuchtung positionierbar ist, und
   wobei ein Strahlengang des Beleuchtungslichts zwischen der Blendenkante (BK, BH, BV) und der von der Halteeinrichtung (TOA) gehaltenen Probe (OB) frei ist von verstellbaren strahlfokussierenden Komponenten,
   **dadurch gekennzeichnet,**
   **dass** zum Anpassen des Strahlengangs des Beleuchtungslichts an die wirksame Eintrittspupille des Objektivs (OBJ1, OBJ2, OBJ3) Mittel zum variablen Positionieren der Blendenkante (BK, BH, BV) in Richtung (Z) der optischen Achse (OA) vorhanden sind, wobei eine Position der Blendenkante (BK, BH, BV) in Richtung (Z) der optischen Achse (OA) unabhängig von einer Position der Blendenkante (BK, BH, BV) quer zur optischen Achse (OA) variierbar ist,
   **dass** an dem Gehäuse (G) Montagemittel zum Montieren eines separaten Probenauflagetischs (KT) vorhanden sind,
   **dass** Mittel (HST) zum Feststellen der Anwesenheit eines Probenauflagetischs (KT) vorhanden sind,
   **dass** das Gehäuse (G) eine Durchgriffsöffnung aufweist, durch welche die Blendenkante (BK, BH, BV) in Richtung der optischen Achse (OA) hindurchbewegbar ist,
   **dass** die Halteeinrichtung (TOA) im Bereich der Durchgriffsöffnung des Gehäuses (G) oder an einem separaten Probenauflagetisch (KT) gebildet ist und
   **dass** eine Steuerungseinrichtung vorhanden ist, die zum Positionieren der Blendenkante abhängig mindestens von einer festgestellten Anwesenheit eines Probenauflagetischs (KT) eingerichtet ist.

2. Vorrichtung nach Anspruch 1,
   **dadurch gekennzeichnet,**
   **dass** Mittel (HST) zum Feststellen einer Identität eines Probenauflagetischs (KT) vorhanden sind,
   **dass** die Steuerungseinrichtung zum Positionieren der Blendenkante abhängig von einer festgestellten Identität eines Probenauflagetischs (KT) eingerichtet ist.

3. Vorrichtung nach Anspruch 1 oder 2,
   **dadurch gekennzeichnet,**
   **dass** die Steuerungseinrichtung dazu eingerichtet ist, die Blendenkante (BK, BH, BV) genau dann durch die Durchgriffsöffnung des Gehäuses (G) hindurchzubewegen, wenn die Mittel (HST) zum Feststellen von Anwesenheit eines Probenauflagetischs (KT) die Anwesenheit eines Probenauflagetischs (KT) feststellen.

4. Vorrichtung nach einem der Ansprüche 1 bis 3,
   **dadurch gekennzeichnet,**
   **dass** in den Probenauflagetisch (KT) Zubehör (RL), insbesondere eine Ringleuchte (RL) zur Dunkelfeld-Mikroskopie, einsetzbar ist,
   **dass** Mittel (HSR) zum Feststellen von Anwesenheit von in den Probenauflagetisch (KT) eingesetztem Zubehör (RL) vorhanden sind und
   **dass** die Steuerungseinrichtung dazu eingerichtet ist, die Blendenkante (BK, BH, BV) abhängig von einer festgestellten Anwesenheit von in den Probenauflagetisch (KT) eingesetztem Zubehör (RL) zu positionieren.

5. Vorrichtung nach Anspruch 4,
   **dadurch gekennzeichnet,**
   **dass** Mittel (HSR) zum Feststellen einer Identität von in den Probenauflagetisch (KT) eingesetztem Zubehör (RL) vorhanden sind,
   **dass** die Steuerungseinrichtung zum Positionieren der Blendenkante abhängig von einer festgestellten Identität von in den Probenauflagetisch (KT) eingesetztem Zubehör (RL) eingerichtet ist.

6. Vorrichtung nach einem der Ansprüche 1 bis 5,
   **dadurch gekennzeichnet,**
   **dass** Montagemittel für eine Adapterplatte (AP) zum Beeinflussen des Beleuchtungslichtbündels, insbesondere für einen Polarisationsfilter, einen Farbfilter, einen Diffusor und/oder eine Blende, vorhanden sind, dass Mittel (HSA) zum Feststellen von Anwesenheit einer Adapterplatte (AP) vorhanden sind und
   **dass** die Steuerungseinrichtung dazu eingerichtet ist, die Blendenkante (BK, BH, BV) abhängig von einer festgestellten Anwesenheit einer Adapterplatte (AP) zu positionieren.

7. Vorrichtung nach Anspruch 6,
   **dadurch gekennzeichnet,**
   **dass** Mittel (HSA) zum Feststellen einer Identität einer Adapterplatte (AP) vorhanden sind,
   **dass** die Steuerungseinrichtung zum Positionieren der Blendenkante abhängig von einer festgestellten Identität einer Adapterplatte (AP) eingerichtet ist.

8. Vorrichtung nach einem der Ansprüche 1 bis 7,
   **dadurch gekennzeichnet,**
   **dass** zum Verändern des Kontrasts Mittel zum variablen Positionieren der Blendenkante (BK, BH, BV) in einer Richtung (VB) quer zur optischen Achse (OA) vorhanden sind.

9. Vorrichtung nach einem der Ansprüche 1 bis 8,
   **dadurch gekennzeichnet,**
   **dass** die Mittel (HST) zum Feststellen von Anwesenheit und insbesondere Identität eines Probenauflagetischs (KT), die Mittel (HSR) zum Feststellen von Anwesenheit und insbesondere Identität von in den Probenauflagetisch (KT) eingesetztem Zubehör (RL) und die Mittel (HSA) zum Feststellen von Anwesenheit und insbesondere Identität einer Adapterplatte (AP) jeweils einen Magnetfeldsensor (HSA, HSR, HST), insbesondere einen Hallsensor, aufweisen.

10. Vorrichtung nach einem der Ansprüche 1 bis 9,
    **dadurch gekennzeichnet,**
    **dass** mit den Mitteln zum variablen Positionieren der Blendenkante (BK, BH, BV) in Richtung (Z) der optischen Achse (OA) und mit den Mitteln zum variablen Positionieren der Blendenkante (BK, BH, BV) in einer Richtung (VB) quer zur optischen Achse (OA) die Blendenkante (BK, BH, BV) um eine Drehachse, welche quer zur optischen Achse (OA) steht, drehbar ist.

11. Verfahren zur Durchlichtbeleuchtung für ein Lichtmikroskop mit veränderlicher wirksamer Eintrittspupille eines Objektivs,
    bei dem eine von einer Halteeinrichtung (TOA) gehaltene Probe (OB) mit Beleuchtungslicht von einer Lichtquelle (LQ) beaufschlagt wird und
    bei dem ein von der Lichtquelle (LQ) ausgehendes Beleuchtungslichtbündel von einer zwischen der Halteeinrichtung (TOA) und der Lichtquelle (LQ) angeordneten Blendenkante (BK, BH, BV) beschnitten wird, wobei insbesondere ein Strahlengang des Beleuchtungslichts zwischen der Blendenkante (BK, BH, BV) und der von der Halteeinrichtung (TOA) gehaltenen Probe (OB) frei ist von verstellbaren strahlfokussierenden Komponenten,
    wobei die Lichtquelle (LQ) in einem Gehäuse (G) angeordnet ist, an welchem mit Montagemitteln ein separater Probenauflagetisch (KT) montierbar ist,
    wobei die Halteeinrichtung (TOA) im Bereich der Durchgriffsöffnung des Gehäuses (G) oder an einem separaten Probenauflagetisch (KT) gebildet ist und
    wobei das Gehäuse (G) eine Durchgriffsöffnung aufweist, durch welche die Blendenkante (BK, BH, BV) in Richtung einer optischen Achse (OA) hindurchbewegbar ist,
    **dadurch gekennzeichnet,**
    **dass** eine Anwesenheit eines Probenauflagetischs (KT) festgestellt wird und

**dass** die Blendenkante (BK, BH, BV) sich quer zu einer optischen Achse (OA), insbesondere des Objektivs (OBJ1, OBJ2, OBJ3), erstreckt und abhängig von der Lage der wirksamen Eintrittspupille des Objektivs (OBJ1, OBJ2, OBJ3) und abhängig mindestens von einer festgestellten Anwesenheit eines Probenauflagetischs (KT) in Richtung (Z) der optischen Achse (OA) positioniert wird.

12. Verfahren nach Anspruch 11,
**dadurch gekennzeichnet,**
**dass**, wenn die Blendenkante (BK, BH, BV) durch die Durchgriffsöffnung in den Probenauflagetisch (KT) bewegt worden ist und mit Mitteln (HST) zum Feststellen von Anwesenheit eines Probenauflagetischs (KT) festgestellt wird, dass der Probenauflagetisch (TK) entfernt wird, ein Bewegen der Blendenkante (BK, BH, BV) blockiert wird.

13. Verfahren nach Anspruch 11,
**dadurch gekennzeichnet,**
**dass**, wenn die Blendenkante (BK, BH, BV) durch die Durchgriffsöffnung in den Probenauflagetisch (KT) bewegt worden ist und mit Mitteln (HST) zum Feststellen von Anwesenheit eines Probenauflagetischs (KT) festgestellt wird, dass der Probenauflagetisch (TK) entfernt wird, die Blendenkante (BK, BH, BV) in das Gehäuse (G) zurückbewegt wird.

14. Verfahren nach einem der Ansprüche 11 bis 13,
**dadurch gekennzeichnet,**
**dass** zum Bewegen der Blendenkante (BK, BH, BV) durch die Durchgriffsöffnung die Blendenkante (BK, BH, BV) zumindest um eine Drehachse, welche quer zur optischen Achse (OA) steht, gedreht wird.

15. Verfahren nach einem der Ansprüche 11 bis 14,
**dadurch gekennzeichnet,**
**dass** eine Mikroskopeinstellung und/oder eine Mikroskopkonfiguration abgefragt werden,
**dass** an Hand der Mikroskopeinstellung und/oder der Mikroskopkonfiguration und anhand von Beleuchtunasparametern, insbesondere Beleuchtunashomogenität, Bildkontrast und/oder Schattenwurf im Mikroskopbild, eine optimale Blendenposition bestimmt wird,
**dass** die Anwesenheit eines Probenauflagetischs (KT), die Anwesenheit von in den Probenauflagetisch (KT) eingesetztem Zubehör (RL) und/oder die Anwesenheit einer Adapterplatte (AP) festgestellt werden und daraus ein verfügbarer Bewegungsraum der Blendenkante (BK, BH, BV) in Richtung der optischen Achse (OA) ermittelt wird,
**dass** die Blendenkante (BK, BH, BV) an der optimalen Blendenposition positioniert wird, wenn die optimale Blendenposition im verfügbaren Bewegungsraum liegt, und

**dass**, wenn die optimale Blendenposition außerhalb des verfügbaren Bewegungsraums liegt, die Blendenkante (BK, BH, BV) an einem zur optimalen Blendenposition benachbarten Ende des verfügbaren Bewegungsraums positioniert wird.

16. Verfahren nach einem der Ansprüche 11 bis 14,
**dadurch gekennzeichnet,**
**dass** eine Mikroskopeinstellung und/oder eine Mikroskopkonfiguration abgefragt werden,
**dass** an Hand der Mikroskopeinstellung und/oder der Mikroskopkonfiguration und anhand von Beleuchtungsparametern, insbesondere Beleuchtunashomogenität. Bildkontrast und/oder Schattenwurf im Mikroskopbild, eine optimale Blendenposition bestimmt wird,
**dass** die Anwesenheit eines Probenauflagetischs (KT), die Anwesenheit von in den Probenauflagetisch (KT) eingesetztem Zubehör (RL) und/oder die Anwesenheit einer Adapterplatte (AP) festgestellt werden und daraus ein verfügbarer Bewegungsraum der Blendenkante (BK, BH, BV) in Richtung der optischen Achse (OA) ermittelt wird,
**dass** überprüft wird, ob die optimale Blendenposition innerhalb des verfügbaren Bewegungsraums liegt,
**dass**, wenn die optimale Blendenposition außerhalb des verfügbaren Bewegungsraums liegt, ein Prismenfilm (PR) in das Beleuchtungslichtbündel bewegt wird, und
**dass**, wenn die optimale Blendenposition im verfügbaren Bewegungsraum liegt, die Blendenkante (BK, BH, BV) an der optimalen Blendenposition positioniert wird.

17. Mikroskopsystem mit einem Lichtmikroskop und einer Vorrichtung zur Durchlichtbeleuchtung nach einem der Ansprüche 1 bis 10.

**Claims**

1. A transmitted light illumination apparatus for light microscopes, in particular stereo microscopes or macroscopes with a changing effective entrance pupil of an objective, the apparatus comprising
a light source (LQ) adapted to emit an illuminating light beam,
a housing (G), in which the light source (LQ) is arranged,
a holding device (TOA) for holding a sample (OB) to be examined and
at least one diaphragm edge (BK, BH, BV) to trim the illuminating light beam, wherein the diaphragm edge (BK, BH, BV) extends transversely to an optical axis (OA), in particular of an objective (OBJ1, OBJ2, OBJ3), of a light microscope, which can be positioned in an operating state on the transmitted light illumination apparatus, and

wherein a beam path of the illuminating light between the diaphragm edge (BK, BH, BV) and the sample (OB) which is held by the holding device (TOA) is free of adjustable beam-focussing components, **characterised in that**

in order to adapt the beam path of the illuminating light to the effective entrance pupil of the objective (OBJ1, OBJ2, OBJ3) means for variable positioning of the diaphragm edge (BK, BH, BV) in direction (Z) of the optical axis (OA) are provided, wherein a position of the diaphragm edge (BK, BH, BV) in the direction (Z) of the optical axis (OA) can be varied irrespectively of a position of the diaphragm edge (BK, BH, BV) transversely to the optical axis (OA), assembly means are provided on the housing (G) for assembling a separate sample support table (KT),

means (HST) for determining the presence of a sample support table (KT) are present,

the housing (G) comprises a passage opening, through which the diaphragm edge (BK, BH, BV) can be moved in the direction of the optical axis (OA), the holding device (TOA) is formed in the region of the passage opening of the housing (G) or on a separate sample support table (KT), and

a control device is provided which is adapted to position the diaphragm edge in dependence upon at least a determined presence of a sample support table (KT).

2. Apparatus according to claim 1,
**characterised in that**
means (HST) are provided for determining an identity of a sample support table (KT),
the control device is adapted to position the diaphragm edge in dependence upon a determined identity of a sample support table (KT).

3. Apparatus according to claim 1 or 2,
**characterised in that**
the control device is adapted to move the diaphragm edge (BK, BH, BV) through the passage opening of the housing (G) precisely when the means (HST) for determining the presence of a sample support table (KT) determine the presence of a sample support table (KT).

4. Apparatus according to one of the claims 1 to 3,
**characterised in that**
accessories (RL), in particular a ring light (RL) for dark field microscopy, can be inserted in the sample support table (KT),
means (HSR) for determining the presence of accessories (RL) inserted in the sample support table (KT) are provided, and
the control device is adapted to position the diaphragm edge (BK, BH, BV) in dependence upon a determined presence of accessories (RL) introduced into the sample support table (KT).

5. Apparatus according to claim 4,
**characterised in that**
means (HSR) are provided for determining an identity of accessories (RL) introduced into the sample support table (KT),
the control device is adapted to position the diaphragm edge in dependence upon a determined identity of accessories (RL) inserted into the sample support table (KT).

6. Apparatus according to one of the claims 1 to 5,
**characterised in that**
assembly means for an adapter plate (AP) for influencing the illuminating light beam, in particular for a polarisation filter, a colour filter, a diffuser and/or a diaphragm, are present,
means (HSA) for determining the presence of an adapter plate (AP) are provided and
the control device is adapted to position the diaphragm edge (BK, BH, BV) in dependence upon a determined presence of an adapter plate (AP).

7. Apparatus according to claim 6,
**characterised in that**
means (HSA) are provided to determine an identity of an adapter plate (AP), the control device is adapted to position the diaphragm edge in dependence upon a determined identity of an adapter plate (AP).

8. Device according to one of the claims 1 to 7,
**characterised in that**
in order to change the contrast, means are provided for variable positioning of the diaphragm edge (BK, BH, BV) in a direction (VB) transversely to the optical axis (OA).

9. Apparatus according to one of the claims 1 to 8,
**characterised in that**
the means (HST) for determining the presence and in particular identity of a sample support table (KT), the means (HSR) for determining the presence and in particular identity of accessories (RL) inserted into the sample support table (KT) and the means (HSA) for determining the presence and in particular identity of an adapter plate (AP) respectively comprise a magnetic field sensor (HSA, HSR, HST), in particular a Hall sensor.

10. Apparatus according to one of the claims 1 to 9,
**characterised in that**
the diaphragm edge (BK, BH, BV) can be rotated about a rotation axis which is transverse to the optical axis (OA) with the means for variable positioning of the diaphragm edge (BK, BH, BV) in the direction (Z) of the optical axis (OA) and with the means for variable positioning of the diaphragm edge (BK, BH, BV) in a direction transversely to the optical axis (OA).

11. Transmitted light illumination method for a light microscope with changing effective entrance pupil of an objective,
in which a sample (OB) held by a holding device (TOA) is subjected to illuminating light from a light source (LQ) and
in which an illuminating light beam emitted from the light source (LQ) is trimmed by a diaphragm edge (BK, BH, BV) arranged between the holding device (TOA) and the light source (LQ), wherein in particular a beam path of the illuminating light between the diaphragm edge (BK, BH, BV) and the sample (OB) held by the holding device (TOA) is free of adjustable beam-focussing components,
wherein the light source (LQ) is arranged in a housing (G), on which a separate sample support table (KT) can be assembled with assembly means,
wherein the holding device (TOA) is formed in the region of the passage opening of the housing (G) or on a separate sample support table (KT) and
wherein the housing (G) comprises a passage opening, through which the diaphragm edge (BK, BH, BV) can be moved in the direction of an optical axis (OA),
**characterised in that**
the presence of a sample support table (KT) is determined, and
the diaphragm edge (BK, BH, BV) extends transversely to an optical axis (OA), in particular of the objective (OBJ1, OBJ2, OBJ3), and is positioned in dependence upon the position of the effective entrance pupil of the objective (OBJ1, OBJ2, OBJ3) and in dependence upon at least a determined presence of a sample support table (KT) in direction (Z) of the optical axis (OA).

12. Method according to claim 11,
**characterised in that**
if the diaphragm edge (BK, BH, BV) has been moved through the passage opening into the sample support table (KT) and it is determined with means (HST) for determining the presence of a sample support table (KT) that the sample support table (TK) is removed, movement of the diaphragm edge (BK, BH, BV) is blocked.

13. Method according to claim 11,
**characterised in that**
if the diaphragm edge (BK, BH, BV) has been moved through the passage opening into the sample support table (KT) and it is determined with means (HST) for determining the presence of a sample support table (KT) that the sample support table (KT) is removed, the diaphragm edge (BK, BH, BV) is moved back into the housing (G).

14. Method according to one of the claims 11 to 13,
**characterised in that**
for the movement of the diaphragm edge (BK, BH, BV) through the passage opening the diaphragm edge (BK, BH, BV) is rotated at least about a rotation axis which is transverse to the optical axis (OA).

15. Method according to one of the claims 11 to 14,
**characterised in that**
a microscope setting and/or a microscope configuration is / are enquired, using the microscope setting and/or the microscope configuration and using illumination parameters, in particular illumination homogeneity, image contrast und/or shadow in the microscope image an optimal diaphragm position is determined, the presence of a sample support table (KT), the presence of accessories (RL) introduced into the sample support table (KT) and/or the presence of an adapter plate (AP) are determined and from this information an available movement space of the diaphragm edge (BK, BH, BV) in the direction of the optical axis (OA) is determined,
the diaphragm edge (BK, BH, BV) is positioned at the optimal diaphragm position if the optimal diaphragm position lies in the available movement space, and
if the optimal diaphragm position lies outside of the available movement space the diaphragm edge (BK, BH, BV) is positioned at an end of the available movement space adjacent to the optimal diaphragm position.

16. Method according to one of the claims 11 to 14,
**characterised in that**
a microscope setting and/or a microscope configuration is enquired,
using the microscope setting and/or microscope configuration and using illumination parameters, in particular illumination homogeneity, image contrast und/or shadow in the microscope image an optimal diaphragm position is determined, the presence of a sample support table (KT), the presence of accessories (RL) introduced into the sample support table (KT) and/or the presence of an adapter plate (AP) are determined, and, from these, an available movement space of the diaphragm edge (BK, BH, BV) in the direction of the optical axis (OA) is determined,
it is checked whether the optimal diaphragm position lies within the available movement space,
if the optimal diaphragm position lies outside of the available movement space, a prism film (PR) is moved into the illuminating light beam, and
if the optimal diaphragm position lies in the available movement space, the diaphragm edge (BK, BH, BV) is positioned at the optimal diaphragm position.

17. Microscope system having a light microscope and an apparatus for transmitted light illumination according to one of the claims 1 to 10.

**Revendications**

1. Dispositif d'éclairage par transmission de lumière pour des microscopes optiques, en particulier des stéréo-microscopes ou des macroscopes, comprenant un objectif à pupille d'entrée active variable, avec une source de lumière (LQ), pour l'émission d'un faisceau de lumière d'éclairage, avec un boîtier (G), dans lequel la source de lumière (LQ) est disposée, avec un dispositif de maintien (TOA), pour le maintien d'un échantillon (OB) à analyser, et avec au moins une arête d'obturateur (BK, BH, BV), pour la réduction du faisceau de lumière d'éclairage, dans lequel l'arête d'obturateur (BK, BH, BV) s'étend transversalement à un axe optique (OA), en particulier d'un objectif (OBJ1, OBJ2, OBJ3), d'un microscope optique, qui peut, dans un état de fonctionnement, être positionné sur le dispositif d'éclairage par transmission de lumière, et dans lequel un trajet de rayonnement de la lumière d'éclairage entre l'arête d'obturateur (BK, BH, BV) et l'échantillon (OB) maintenu par le dispositif de maintien (TOA) est exempt de composants réglables de focalisation du rayonnement, **caractérisé :**

   **en ce que** des moyens destinés au positionnement variable de l'arête d'obturateur (BK, BH, BV) dans la direction (Z) de l'axe optique (OA) sont présents en vue de l'adaptation du trajet de rayonnement de la lumière d'éclairage à la pupille d'entrée active de l'objectif (OBJ1, OBJ2, OBJ3), une position de l'arête d'obturateur (BK, BH, BV) dans la direction (Z) de l'axe optique (OA) pouvant être modifiée indépendamment d'une position de l'arête d'obturateur (BK, BH, BV) transversalement à l'axe optique (OA),
   **en ce que** des moyens de montage sont prévus sur le boîtier (G) pour le montage d'une platine (KT) de support d'échantillon distincte,
   **en ce que** des moyens (HST) sont prévus pour la détermination de la présence d'une platine (KT) de support d'échantillon,
   **en ce que** le boîtier (G) comprend une ouverture de passage à travers laquelle l'arête d'obturateur (BK, BH, BV) peut être déplacée dans la direction de l'axe optique (OA),
   **en ce que** le dispositif de maintien (TOA) est constitué dans la zone de l'ouverture de passage du boîtier (G) ou sur une platine (KT) de support d'échantillon distincte, et
   **en ce qu'**un dispositif de commande est prévu, en étant organisé pour le positionnement de l'arête d'obturateur en fonction au moins de la détermination d'une présence d'une platine (KT) de support d'échantillon.

2. Dispositif selon la revendication 1, **caractérisé :**

   **en ce que** des moyens (HST) sont prévus pour la détermination d'une identité d'une platine (KT) de support d'échantillon,
   **en ce que** le dispositif de commande est organisé pour le positionnement de l'arête d'obturateur en fonction d'une identité - qui a été déterminée - d'une platine (KT) de support d'échantillon.

3. Dispositif selon la revendication 1 ou 2, **caractérisé :**

   **en ce que** le dispositif de commande est organisé pour déplacer l'arête d'obturateur (BK, BH, BV) à travers l'ouverture de passage du boîtier (G) seulement si les moyens (HST) de détermination de la présence d'une platine (KT) de support d'échantillon déterminent la présence d'une platine (KT) de support d'échantillon.

4. Dispositif selon une des revendications 1 à 3, **caractérisé :**

   **en ce qu'**un accessoire (RL), en particulier un éclairage annulaire (RL) pour microscopie en champ sombre, peut être utilisé sur la platine (KT) de support d'échantillon,
   **en ce que** des moyens (HSR) sont prévus pour la détermination de la présence d'un accessoire (RL) utilisé sur la platine (KT) de support d'échantillon, et
   **en ce que** le dispositif de commande est organisé pour le positionnement de l'arête d'obturateur (BK, BH, BV) en fonction d'une présence - qui a été déterminée - d'un accessoire (RL) utilisé sur la platine (KT) de support d'échantillon.

5. Dispositif selon la revendication 4, **caractérisé :**

   **en ce que** des moyens (HSR) sont prévus pour la détermination d'une identité d'un accessoire (RL) utilisé sur la platine (KT) de support d'échantillon,
   **en ce que** le dispositif de commande est organisé pour le positionnement de l'arête d'obturateur en fonction d'une identité - qui a été déterminée - d'un accessoire (RL) utilisé sur la platine (KT) de support d'échantillon.

6. Dispositif selon une des revendications 1 à 5, **caractérisé :**

**en ce que** des moyens de montage pour une plaque d'adaptation (AP), en particulier pour un filtre de polarisation, un filtre de couleur, un diffuseur et/ou un écran, sont prévus pour agir sur le faisceau de lumière d'éclairage,

**en ce que** des moyens (HSA) sont prévus pour la détermination de la présence d'une plaque d'adaptation (AP), et

**en ce que** le dispositif de commande est organisé pour le positionnement de l'arête d'obturateur (BK, BH, BV) en fonction d'une présence - qui a été déterminée - d'une plaque d'adaptation (AP).

**7.** Dispositif selon la revendication 6, **caractérisé :**

**en ce que** des moyens (HSA) sont prévus pour la détermination d'une identité d'une plaque d'adaptation (AP),

**en ce que** le dispositif de commande est organisé pour le positionnement de l'arête d'obturateur en fonction d'une identité - qui a été déterminée - d'une plaque d'adaptation (AP).

**8.** Dispositif selon une des revendications 1 à 7, **caractérisé :**

**en ce que**, pour la modification du contraste, des moyens sont prévus pour un positionnement variable de l'arête d'obturateur (BK, BH, BV) dans une direction (VB) transversale à l'axe optique (OA).

**9.** Dispositif selon une des revendications 1 à 8, **caractérisé :**

**en ce que** les moyens (HST) pour la détermination de la présence, et plus particulièrement de l'identité, d'une platine (KT) de support d'échantillon, les moyens (HSR) pour la détermination de la présence, et plus particulièrement de l'identité, d'un accessoire (RL) utilisé sur la platine (KT) de support d'échantillon et les moyens (HSA) pour la détermination de la présence, et plus particulièrement de l'identité, d'une plaque d'adaptation (AP) comprennent chacun respectivement un capteur de champ magnétique (HSA, HSR, HST), plus particulièrement un capteur à effet Hall.

**10.** Dispositif selon une des revendications 1 à 9, **caractérisé :**

**en ce que**, à l'aide des moyens pour le positionnement variable de l'arête d'obturateur (BK, BH, BV) dans la direction (Z) de l'axe optique (OA) et à l'aide des moyens pour le positionnement variable de l'arête d'obturateur (BK, BH, BV) dans une direction (VB) transversale à l'axe optique (OA), l'arête d'obturateur (BK, BH, BV) est mobile en rotation autour d'un axe de rotation qui est transversal à l'axe optique (OA).

**11.** Procédé d'éclairage par transmission de lumière pour un microscope optique comprenant un objectif à pupille d'entrée active variable, selon lequel un échantillon (OB) maintenu par un dispositif de maintien (TOA) est exposé à une lumière d'éclairage provenant d'une source de lumière (LQ), et selon lequel un faisceau de lumière d'éclairage provenant de la source de lumière (LQ) est réduit au moyen d'une arête d'obturateur (BK, BH, BV) disposée entre le dispositif de maintien (TOA) et la source de lumière (LQ), un trajet de rayonnement de la lumière d'éclairage entre l'arête d'obturateur (BK, BH, BV) et l'échantillon (OB) maintenu par le dispositif de maintien (TOA) étant, plus particulièrement, exempt de composants réglables de focalisation du rayonnement, la source de lumière (LQ) étant disposée dans un boîtier (G) sur lequel une platine (KT) de support d'échantillon distincte peut être montée à l'aide de moyens de montage, le dispositif de maintien (TOA) étant constitué dans la zone de l'ouverture de passage du boîtier (G) ou sur une platine (KT) de support d'échantillon distincte, et le boîtier (G) comprenant une ouverture de passage à travers laquelle l'arête d'obturateur (BK, BH, BV) peut être déplacée dans la direction d'un axe optique (OA),

**caractérisé :**

**en ce qu'**une présence d'une platine (KT) de support d'échantillon est déterminée, et

**en ce que** l'arête d'obturateur (BK, BH, BV) s'étend transversalement à un axe optique (OA), plus particulièrement de l'objectif (OBJ1, OBJ2, OBJ3), et est positionnée dans une direction (Z) de l'axe optique (OA) en fonction de la position de la pupille d'entrée active de l'objectif (OBJ1, OBJ2, OBJ3) et en fonction au moins d'une présence - qui a été déterminée - d'une platine (KT) de support d'échantillon.

**12.** Procédé selon la revendication 11, **caractérisé :**

**en ce que**, si l'arête d'obturateur (BK, BH, BV) a été déplacée à travers l'ouverture de passage sur la platine (KT) de support d'échantillon et si, à l'aide des moyens (HST) pour la détermination de la présence d'une platine (KT) de support d'échantillon, on a déterminé que la platine (KT) de support d'échantillon est éloignée, un déplacement de l'arête d'obturateur (BK, BH, BV) est bloqué.

**13.** Procédé selon la revendication 11, **caractérisé :**

en ce que, si l'arête d'obturateur (BK, BH, BV) a été déplacée à travers l'ouverture de passage sur la platine (KT) de support d'échantillon et si, à l'aide des moyens (HST) pour la détermination de la présence d'une platine (KT) de support d'échantillon, on a déterminé que la platine (KT) de support d'échantillon est éloignée, l'arête d'obturateur (BK, BH, BV) est ramenée dans le boîtier (G).

**14.** Procédé selon une des revendications 11 à 13, **caractérisé :**

en ce que, pour le déplacement de l'arête d'obturateur (BK, BH, BV) à travers l'ouverture de passage, l'arête d'obturateur (BK, BH, BV) tourne au moins autour d'un axe de rotation qui est transversal à l'axe optique (OA).

**15.** Procédé selon une des revendications 11 à 14, **caractérisé :**

en ce qu'une disposition de microscope et/ou une configuration de microscope est(sont) proposée(s),
en ce que, sur la base de la disposition de microscope et/ou de la configuration de microscope et sur la base de paramètres d'éclairage, en particulier l'homogénéité de l'éclairage, le contraste d'image et/ou la projection d'ombres dans l'image du microscope, une position d'écran optimale est déterminée,
en ce que la présence d'une platine (KT) de support d'échantillon, la présence d'un accessoire (RL) utilisé sur la platine (KT) de support d'échantillon et/ou la présence d'une plaque d'adaptation (AP) sont déterminées, et, sur cette base, un espace de déplacement disponible de l'arête d'obturateur (BK, BH, BV) dans la direction de l'axe optique (OA) est attribué,
en ce que l'arête d'obturateur (BK, BH, BV) est positionnée au niveau de la position d'écran optimale, si la position d'écran optimale est située dans l'espace de déplacement disponible, et
en ce que, si la position d'écran optimale est située à l'extérieur de l'espace de déplacement disponible, l'arête d'obturateur (BK, BH, BV) est positionnée au niveau d'une extrémité de l'espace de déplacement disponible voisine de la position d'écran optimale.

**16.** Procédé selon une des revendications 11 à 14,

**caractérisé :**

en ce qu'une disposition de microscope et/ou une configuration de microscope est(sont) proposée(s),
en ce que, sur la base de la disposition de microscope et/ou de la configuration de microscope et sur la base de paramètres d'éclairage, en particulier l'homogénéité de l'éclairage, le contraste d'image et/ou la projection d'ombres dans l'image du microscope, une position d'écran optimale est déterminée,
en ce que la présence d'une platine (KT) de support d'échantillon, la présence d'un accessoire (RL) utilisé sur la platine (KT) de support d'échantillon et/ou la présence d'une plaque d'adaptation (AP) sont déterminées, et, sur cette base, un espace de déplacement disponible de l'arête d'obturateur (BK, BH, BV) dans la direction de l'axe optique (OA) est attribué,
en ce que l'on vérifie si la position d'écran optimale est située à l'intérieur de l'espace de déplacement disponible, et
en ce que, si la position d'écran optimale est située à l'extérieur de l'espace de déplacement disponible, un film à prisme (PR) est placé dans le faisceau de lumière d'éclairage, et
en ce que, si la position d'écran optimale est située dans l'espace de déplacement disponible, l'arête d'obturateur (BK, BH, BV) est positionnée au niveau de la position d'écran optimale.

**17.** Système de microscope avec un microscope optique et un dispositif d'éclairage par transmission de lumière selon une des revendications 1 à 10.

## Fig. 1: STAND DER TECHNIK

## Fig. 2: STAND DER TECHNIK

**Fig. 3**

**Fig. 4**

## Fig. 5

**Fig. 6**

**Fig. 7**

Fig. 8

# Fig. 9

Fig. 10

**Fig. 11**

**Fig. 12**

**Fig. 13**

**Fig. 14**

**Fig. 15**

**Fig. 16**

Fig. 17

**Fig. 18**

**Fig. 19**

**Fig. 20**

**Fig. 21**

**Fig. 22**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004056685 A1

- US 2001005280 A1